# EUROPEAN PATENT APPLICATION

(11) **EP 3 418 520 A1**
(43) Date of publication of application: **26.12.2018**
(21) Application number: 17770205.7
(22) Date of filing: 21.03.2017
(51) Int. Cl.: F01N 3/24, B01D 53/92, F01N 3/08, F01N 13/00, F16H 57/04, G01N 27/409

(54) **STRADDLE-TYPE VEHICLE**

(30) Priority: 22.03.2016 JP 2016057501
(71) Applicant: Yamaha Hatsudoki Kabushiki Kaisha, Iwata-shi, Shizuoka 438-8501 (JP)
(72) Inventor: SHINADA, Keiichi, Iwata-shi Shizuoka 438-8501 (JP); NISHIGAKI, Masato, Iwata-shi Shizuoka 438-8501 (JP); HARA, Takahiko, Iwata-shi Shizuoka 438-8501 (JP); HARADA, Hisashi, Iwata-shi Shizuoka 438-8501 (JP); MIZUNO, Kazuyoshi, Iwata-shi Shizuoka 438-8501 (JP)
(74) Representative: Zimmermann, Tankred Klaus
(86) International application number: PCT/JP2017/011197
(87) International publication number: WO 2017/164163

(57) **Abstract**

A straddled vehicle in which variation in purification performance of purifying exhaust gas can be restrained is provided.

An engine unit mounted on a straddled vehicle 1 includes: an engine main body 20 including a combustion chamber 36; an exhaust passage member 43 allowing exhaust gas to flow from the combustion chamber 36 to a discharge port 42e; an upstream catalyst 46 which is the most upstream catalyst in the exhaust passage member 43 in the flow direction of the exhaust gas; an oxygen detector 92f; and a phosphorus adhesion reduction portion 44. The phosphorus adhesion reduction portion 44 and the oxygen detector 92f are provided in the exhaust passage member 43, between the combustion chamber 36 and the upstream catalyst. A catalyst layer 49 of the upstream catalyst 46 includes a noble metal and purifies the exhaust gas. The phosphorus adhesion reduction portion 44 includes at least one of a phosphorus capturing layer 44a or a phosphorus capturing structure 44b and restrains adherence of phosphorus to the catalyst layer 49.

## Description

### [Technical Field]

The present teaching relates to a straddled vehicle.

### [Background Art]

A straddled vehicle including a catalyst has been known. The catalyst includes a base and a catalyst layer including a noble metal. The catalyst purifies, by the noble metal, exhaust gas exhausted from a combustion chamber of an engine main body. The straddled vehicle has been demanded to improve the purification performance of purifying the exhaust gas. In order to improve the purification performance of purifying exhaust gas, a straddled vehicle in which a catalyst is provided in the vicinity of a combustion chamber of an engine main body has been proposed (Patent Literature 1).

### [Citation List]

### [Patent Literatures]

[Patent Literature 1] Japanese Unexamined Patent Publication No. 2014-137001

### [Summary of Invention]

### [Technical Problem]

As in the straddled vehicle of the Patent Literature 1, exhaust gas reaches a catalyst while keeping a high temperature, when the catalyst is provided in the vicinity of the combustion chamber of the engine main body. This improves the purification performance of purifying the exhaust gas by the catalyst. In connection with this, inventors of the subject application tested straddled vehicles in each of which the catalyst was provided in the vicinity of the combustion chamber of the engine main body, in different driving conditions. As a result, they found there were straddled vehicles in which the purification performance of purifying the exhaust gas was significantly deteriorated as the driving time elapsed, and a straddled vehicle in which the purification performance was not deteriorated so much.

An object of the present teaching is to provide a straddled vehicle in which variation in purification performance of purifying exhaust gas can be restrained.

### [Solution to Problem]

The inventors of the subject application tested straddled vehicles in each of which the catalyst was provided in the vicinity of the combustion chamber of the engine main body, in different driving conditions. As a result, they found there were straddled vehicles in which the purification performance of purifying the exhaust gas was significantly deteriorated as the driving time elapsed, and a straddled vehicle in which the purification performance was less likely to be deteriorated. Based on this, the inventors studied causes of the variation in the purification performance of purifying the exhaust gas in the straddled vehicle in detail. As a result, the inventors found that the causes of the variation in the purification performance of purifying the exhaust gas were specific arrangements and in-use configurations of the straddled vehicle.

One of the specific arrangements causing the variation in the purification performance of purifying the exhaust gas is the standard oil used in straddled vehicles. The standard oil used in straddled vehicles is different from the standard oil used in automobiles (four-wheeled vehicles). Oil includes additives. An example of the additives in the oil is an abrasion-resistant additive, i.e., a compound of zinc, phosphorus, sulfur, calcium, etc. The oil used in straddled vehicles includes a large amount of a phosphorus compound (e.g., ZnDTP and ZnDDP) as compared to the oil used in automobiles. In a straddled vehicle, a crankcase member is lubricated by shared oil. The oil enters a combustion chamber through a piston for driving a crankshaft, an intake valve and an exhaust valve driven by a valve operating mechanism, etc. In the straddled vehicle, the phosphorus compound included in the oil is decomposed by heat in the combustion chamber, and exhaust gas including a larger amount of phosphorus flows into a catalyst. In the straddled vehicle, the phosphorus in the exhaust gas is chemically and/or physically adhered to the catalyst. The phosphorus generates a vitreous compound and covers a surface of the catalyst layer, so as to obstruct the dispersion of the exhaust gas inside the catalyst layer. Furthermore, when the catalyst is provided in the vicinity of the combustion chamber, the temperature of the exhaust gas flowing into the catalyst is high, and hence the phosphorus adhered to the catalyst is likely to generate the vitreous compound. Consequently, the exhaust gas is less likely to reach the noble metal in the catalyst layer and the function of the catalyst is deteriorated. The purification performance of purifying the exhaust gas of the straddled vehicle is deteriorated.

Another one of the specific arrangements causing the variation in the purification performance of purifying the exhaust gas is an amount of oil consumed by a straddled vehicle per displacement. Straddled vehicles consume a large amount of oil per displacement as compared to automobiles. Due to this, as compared to automobiles, an amount of phosphorus in the exhaust gas per displacement is large in straddled vehicles. Furthermore, as compared to automobiles, in straddled vehicles, adhered phosphorus reaches a downstream part of the catalyst in the flow direction of the exhaust gas.

One of the specific in-use configurations of a straddled vehicle causing the variation in the purification performance of purifying the exhaust gas in the straddled vehicle is a time during which the straddled vehicle runs while the opening degree of the throttle valve is almost at the maximum. The time during which a vehicle runs while the opening degree of the throttle valve is almost at the maximum is long in straddled vehicles as compared to automobiles. When the time during which a straddled vehicle runs while the opening degree of the throttle valve is almost at the maximum is long, the temperature of the wall surface of the engine main body unit is relatively high and an amount of oil decomposed in the combustion chamber is relatively large. For this reason, when the time during which a straddled vehicle runs while the opening degree of the throttle valve is almost at the maximum is long, an amount of phosphorus included in the exhaust gas is large. For this reason, when the time during which a straddled vehicle runs while the opening degree of the throttle valve is almost at the maximum is long, the purification performance of purifying the exhaust gas of the straddled vehicle is significantly deteriorated. Meanwhile, when the time during which a straddled vehicle runs while the opening degree of the throttle valve is almost at the maximum is short, the temperature of the wall surface of the engine main body unit is relatively low and an amount of oil decomposed in the combustion chamber is relatively small. For this reason, when the time during which a straddled vehicle runs while the opening degree of the throttle valve is almost at the maximum is short, an amount of phosphorus included in the exhaust gas is small. For this reason, when the time during which a straddled vehicle runs while the opening degree of the throttle valve is almost at the maximum is short, the purification performance of purifying the exhaust gas of the straddled vehicle is less likely to be deteriorated. As such, the inventors found that the variation in the purification performance of purifying the exhaust gas occurred based on whether the running time of a straddled vehicle while the opening degree of the throttle valve was large was long or short. The inventors then found that, when a straddled vehicle ran for a long time while the opening degree of the throttle valve was almost at the maximum, variation in the purification performance of purifying the exhaust gas of the straddled vehicle was restrained by restraining adherence of phosphorus, a large amount of which was included in the exhaust gas, from being adhered to the catalyst layer.

Under this circumstance, in order to restrain the deterioration in the purification performance of purifying the exhaust gas of the straddled vehicle having run for a long time while the opening degree of the throttle valve was almost at the maximum, the inventors noticed to provide a phosphorus adhesion reduction portion in the engine unit including the upstream catalyst to restrain adherence of phosphorus to the catalyst layer. The upstream catalyst is the most upstream catalyst in the flow direction of the exhaust gas among one or more catalysts provided in the exhaust passage member of the straddled vehicle. The phosphorus adhesion reduction portion includes at least one of a phosphorus capturing layer or a phosphorus capturing structure.

The phosphorus capturing layer is provided between the combustion chamber and the catalyst layer of the upstream catalyst in the exhaust passage member. The phosphorus capturing layer is applied to the inner surface of the exhaust passage member. The phosphorus capturing layer has either a function of capturing phosphorus by chemically reacting with the phosphorus or a function of capturing phosphorus as its surface is constituted by a rough surface. The catalyst layer includes a noble metal for purifying the exhaust gas. The upstream catalyst therefore purifies the exhaust gas at the most upstream in the flow direction of the exhaust gas. Furthermore, the exhaust passage member has a bending portion between the combustion chamber and the upstream catalyst. Because the flow rate of the exhaust gas is high, phosphorus tends to collide with the bending portion of the exhaust passage member. Due to this, phosphorus tends to be adhered to the bending portion of the exhaust passage member. Under this circumstance, the phosphorus capturing layer is provided between the combustion chamber and the catalyst layer in the exhaust passage member. The phosphorus capturing layer chemically reacts with phosphorus in the exhaust gas. Alternatively, in the phosphorus capturing layer, phosphorus included in the exhaust gas is adhered to the surface of the layer which is constituted by a rough surface. The phosphorus capturing layer is therefore able to capture phosphorus and prevents phosphorus from being adhered to a surface of the catalyst layer of the upstream catalyst.

The phosphorus capturing structure is provided to be closer to the combustion chamber than to the upstream catalyst in the exhaust passage member. The phosphorus capturing structure has a function of capturing phosphorus by decreasing the flow rate of the exhaust gas. The catalyst layer includes a noble metal for purifying the exhaust gas. The upstream catalyst therefore purifies the exhaust gas at the most upstream in the flow direction of the exhaust gas. Furthermore, because the flow rate of the exhaust gas is high, phosphorus tends to be adhered to the structure which decreases the flow rate in the exhaust passage member. Under this circumstance, the phosphorus capturing structure is provided to be closer to the combustion chamber than to the upstream catalyst in the exhaust passage member. The phosphorus capturing structure decreases the flow rate of the exhaust gas to cause phosphorus in the exhaust gas to be adhered thereto. The phosphorus capturing layer is therefore able to capture phosphorus and prevents phosphorus from being adhered to a surface of the catalyst layer of the upstream catalyst.

In summary, when one of the above-described two technical ideas is employed, it is possible to restrain adherence of phosphorus, a large amount of which is included in exhaust gas, to the upstream catalyst, even in a straddled vehicle which has ran for a long time while the opening degree of the throttle valve is large. This makes it possible to restrain variation in the purification performance of purifying the exhaust gas in the straddled vehicle.

According to one aspect of the present teaching, in a straddled vehicle on which an engine unit is mounted, the engine unit includes: an engine main body which includes a cylinder member including a combustion chamber; an exhaust passage member which includes a discharge port through which exhaust gas is discharged to the atmosphere and allows the exhaust gas to flow from the combustion chamber to the discharge port; an upstream catalyst which is the most upstream catalyst in the exhaust passage member in a flow direction of the exhaust gas and includes a catalyst layer including a noble metal purifying the exhaust gas; an upstream oxygen detector which is provided between the combustion chamber and the upstream catalyst in the exhaust passage member and is configured to detect the oxygen density of the exhaust gas; and a phosphorus adhesion reduction portion which is configured to restrain adherence of phosphorus to the catalyst layer and includes at least one of (A) a phosphorus capturing layer which is provided between the combustion chamber and the upstream catalyst in the exhaust passage member and is applied to an inner surface of the exhaust passage member, the phosphorus capturing layer either being formed of a phosphorus reactant chemically reacting with phosphorus in order to have a function of capturing the phosphorus or having a surface constituted by a rough surface in order to have a function of capturing phosphorus or (B) a phosphorus capturing structure which is provided between the combustion chamber and the upstream catalyst in the exhaust passage member and decreases the flow rate of the exhaust gas in order to have a function of capturing phosphorus, the phosphorus capturing structure being provided at a location where a path length from the combustion chamber to the phosphorus capturing structure is shorter than a path length from the phosphorus capturing structure to the upstream catalyst.

According to this arrangement, the straddled vehicle includes the engine unit. The engine unit includes the engine main body, the exhaust passage member, the upstream catalyst, the oxygen sensor, and the phosphorus adhesion reduction portion. The engine main body includes the cylinder member including the combustion chamber. The exhaust passage member is provided with the discharge port through which the exhaust gas is discharged to the atmosphere. The exhaust passage member allows the exhaust gas to flow from the combustion chamber to the discharge port.

The upstream catalyst is provided in the exhaust passage member. The upstream catalyst is the most upstream catalyst in the exhaust passage member in the direction in which the exhaust gas flows. The upstream catalyst includes the catalyst layer. The catalyst layer includes a noble metal which purifies the exhaust gas.

The upstream oxygen detector is provided between the combustion chamber and the upstream catalyst in the exhaust passage member. The upstream oxygen detector is configured to detect the oxygen density of the exhaust gas.

The phosphorus adhesion reduction portion restrains adhesion of phosphorus to the catalyst layer. The phosphorus adhesion reduction portion includes at least one of (A) the phosphorus capturing layer or (B) the phosphorus capturing structure.
(A) The phosphorus capturing layer is provided between the combustion chamber and the upstream catalyst in the exhaust passage member. In other words, the phosphorus capturing layer is provided upstream of the upstream catalyst in the flow direction of the exhaust gas. The phosphorus capturing layer is applied to the inner surface of the exhaust passage member. The phosphorus capturing layer is constituted by phosphorus reactant chemically reacting with phosphorus in order to have a function of capturing phosphorus. Alternatively, the phosphorus capturing layer has a surface constituted by a rough surface in order to have a function of capturing phosphorus. The exhaust passage member includes the bending portion provided between the combustion chamber and the upstream catalyst. Because the flow rate of the exhaust gas is high, exhaust gas tends to collide with the bending portion of the exhaust passage member. Due to this, the phosphorus tends to be adhered to the bending portion of the exhaust passage member. The phosphorus capturing layer is provided between the combustion chamber and the upstream catalyst in the exhaust passage member. The phosphorus capturing layer includes phosphorus reactant which chemically reacts with phosphorus in the exhaust gas. Phosphorus in the exhaust gas passing the phosphorus capturing layer chemically reacts with the phosphorus reactant. The phosphorus reactant is a substance adsorbing phosphorus, for example. In this case, phosphorus in the exhaust gas is adsorbed as phosphorus in the exhaust gas chemically reacts with the phosphorus reactant. The phosphorus reactant is able to capture the phosphorus as the reactant chemically reacts with the phosphorus in the exhaust gas passing the phosphorus capturing layer. Alternatively, a surface of the phosphorus capturing layer is constituted by a rough surface to which phosphorus included in the exhaust gas is adhered. The phosphorus capturing layer is therefore able to capture phosphorus and prevents phosphorus from being adhered to the catalyst layer of the upstream catalyst.
(B) The phosphorus capturing structure is provided between the combustion chamber and the upstream catalyst in the exhaust passage member. In other words, the phosphorus capturing structure is provided upstream of the upstream catalyst in the flow direction of the exhaust gas. The phosphorus capturing structure decreases the flow rate of the exhaust gas in order to have a function of capturing phosphorus. Because the flow rate of the exhaust gas is high, the flow rate of the exhaust gas can be decreased when the structure is provided in the exhaust passage member. Phosphorus tends to be adhered to the structure which decreases the flow rate of the exhaust gas. The path length from the combustion chamber to the phosphorus capturing structures is shorter than the path length from the phosphorus capturing structure to the upstream catalyst. In other words, the phosphorus capturing structure is provided to be close to the combustion chamber. The phosphorus capturing structure decreases the flow rate of the exhaust gas to cause phosphorus in the exhaust gas to be adhered thereto. The phosphorus capturing structure is therefore able to capture phosphorus and prevents phosphorus from being adhered to the catalyst layer of the upstream catalyst.

In this way, variation in the purification performance of purifying the exhaust gas can be restrained in the straddled vehicle.

According to another aspect of the present teaching, the straddled vehicle is arranged such that the phosphorus capturing layer is at least partially provided at a bending portion of the exhaust passage member.

According to this arrangement, the phosphorus capturing layer is at least partially provided at the bending portion of the exhaust passage member. Phosphorus tends to be adhered to the bending portion of the exhaust passage member. The phosphorus capturing layer is provided at the bending portion of the exhaust passage member. Due to this, the phosphorus capturing layer is able to chemically react with a large amount of phosphorus in the exhaust gas. Alternatively, the phosphorus capturing layer is able to cause a large amount of phosphorus included in the exhaust gas to be adhered to the surface of the layer which is constituted by a rough surface. The phosphorus capturing layer is therefore able to capture more phosphorus and further prevents phosphorus from being adhered to the catalyst layer of the upstream catalyst. In this way, variation in the purification performance of purifying the exhaust gas can be further restrained in the straddled vehicle.

According to another aspect of the present teaching, the straddled vehicle is arranged such that the phosphorus capturing structure includes a phosphorus capturing structure layer which either includes, at least on a surface, a phosphorus reactant chemically reacting with phosphorus in order to have a function of capturing phosphorus or has a surface constituted by a rough surface in order to have a function of capturing phosphorus.

According to this arrangement, the phosphorus capturing structure includes the phosphorus capturing structure layer. The phosphorus capturing structure layer includes, at least on a surface, a phosphorus reactant chemically reacting with phosphorus in order to have a function of capturing phosphorus. Alternatively, the phosphorus capturing structure layer includes a rough surface in order to have a function of capturing phosphorus. The phosphorus capturing structure layer chemically reacts with phosphorus in the exhaust gas. Alternatively, the phosphorus capturing structure layer causes phosphorus included in the exhaust gas to be adhered to the surface of the layer which is constituted by a rough surface. The phosphorus capturing structure decreases the flow rate of the exhaust gas to cause phosphorus in the exhaust gas to be adhered thereto. Furthermore, the phosphorus capturing structure layer causes phosphorus in the exhaust gas to be adhered thereto by chemically reacting with phosphorus. The phosphorus capturing structure layer is therefore able to capture more phosphorus and further prevents phosphorus from being adhered to the catalyst layer of the upstream catalyst. In this way, variation in the purification performance of purifying the exhaust gas can be further restrained in the straddled vehicle.

According to another aspect of the present teaching, the above-described straddled vehicle is arranged such that the phosphorus reactant is a metal oxide including at least one material selected from the group consisting of U, Mn, Sn, Ti, Fe, Zr, Ce, Al, Y, Zn, La, and Mg.

According to this arrangement, the phosphorus reactant is a metal oxide including at least one material selected from the group consisting of U, Mn, Sn, Ti, Fe, Zr, Ce, Al, Y, Zn, La, and Mg. These types of the phosphorus reactant are metal oxide with an isoelectric point which is more than 3. It is considered that the phosphorus compound in the exhaust gas exists as phosphate with an isoelectric point which is around 1. There is a large difference in the isoelectric point between the phosphorus compound and the metal oxide with the isoelectric point more than 3, and hence the adsorption of the phosphorus compound to the metal oxide is facilitated. The phosphorus reactant adsorbs phosphorus by the effect of isoelectric point of the metal oxide. In other words, these types of phosphorus reactants are able to restrain phosphorus, a large amount of which is included in the exhaust gas, from being adhered to the catalyst layer. In this way, variation in the purification performance of purifying the exhaust gas can be restrained in the straddled vehicle.

According to another aspect of the present teaching, the above-described straddled vehicle is arranged such that the phosphorus reactant is a metal oxide including at least one material selected from the group consisting of Ba, Sr, Ca, La, Pr, Na, and Zr.

According to this arrangement, the phosphorus reactant is a metal oxide including at least one material selected from the group consisting of Ba, Sr, Ca, La, Pr, Na, and Zr. Each of these types of phosphorus reactants is a substance highly reactive with phosphorus. The phosphorus reactant is therefore able to capture more phosphorus in the exhaust gas passing the upstream catalyst. In other words, these types of phosphorus reactants are able to restrain phosphorus, a large amount of which is included in the exhaust gas, from being adhered to the catalyst layer. In this way, variation in the purification performance of purifying the exhaust gas can be restrained in the straddled vehicle.

According to another aspect of the present teaching, the straddled vehicle is arranged such that the phosphorus capturing structure is constituted by a porous structure having holes penetrating the phosphorus capturing structure in the flow direction of the exhaust gas.

According to this arrangement, the phosphorus capturing structure is constituted by a porous structure. The porous structure has a lot of holes penetrating the same in the flow direction of the exhaust gas. The porous structure may be a honeycomb structure, for example. The exhaust gas passing the exhaust passage member collides with wall portions forming a lot of holes. In other words, the phosphorus capturing structure decreases the flow rate of the exhaust gas to cause phosphorus in the exhaust gas to be adhered thereto. The phosphorus capturing structure is therefore able to capture phosphorus and prevents phosphorus from being adhered to a surface of the catalyst layer of the upstream catalyst.

According to another aspect of the present teaching, the above-described straddled vehicle is arranged such that the engine unit is an engine unit which is specified to use oil in which the content of the phosphorus compound is larger than 0.08mass%.

According to this arrangement, the engine unit of the straddled vehicle is specified to use oil including a large amount of a phosphorus compound as compared to an engine unit of an automobile. In other words, the straddled vehicle exhausts gas including more phosphorus, as compared to automobiles. The phosphorus adhesion reduction portion restrains adhesion of phosphorus to the catalyst layer. In other words, the phosphorus capturing layer and the phosphorus capturing structure which are the phosphorus adhesion reduction portion capture phosphorus and prevent phosphorus from being adhered to the catalyst layer of the upstream catalyst. In this way, variation in the purification performance of purifying the exhaust gas can be restrained in the straddled vehicle which exhausts gas includes more phosphorus as compared to automobiles.

According to another aspect of the present teaching, the above-described straddled vehicle is arranged such that, the engine unit further includes a transmission unit, and oil lubricating the engine main body unit and oil lubricating the transmission unit are the same oil.

According to this arrangement, the engine unit further includes the transmission unit. In straddled vehicles, oil lubricating the engine main body unit and oil lubricating the transmission unit tend to be the same oil. Meanwhile, in automobiles, oil lubricating the engine main body unit and oil lubricating the transmission unit tend to not be the same oil. Due to this, the straddled vehicle consumes more oil per displacement as compared to automobiles. Furthermore, as compared to automobiles, an amount of phosphorus in the exhaust gas per displacement is large in the straddled vehicle. In this regard, the phosphorus adhesion reduction portion restrains adhesion of phosphorus to the catalyst layer. In other words, the phosphorus capturing layer and the phosphorus capturing structure which are the phosphorus adhesion reduction portion capture phosphorus and prevent phosphorus from being adhered to the catalyst layer of the upstream catalyst. For this reason, variation in the purification performance of purifying the exhaust gas can be restrained in the straddled vehicle which exhausts gas including a large amount of phosphorus per displacement as compared to automobiles.

According to another aspect of the present teaching, the above-described straddled vehicle is arranged such that, the engine unit further includes a clutch unit, and oil lubricating the engine main body unit and oil lubricating the clutch unit are the same oil.

According to this arrangement, being different from automobiles, straddled vehicles include the clutch unit being able to move even when the engine is in a stopped state. In straddled vehicles, oil lubricating the engine main body unit and oil lubricating the clutch unit tend to be the same oil. Being different from automobiles, oil with which the clutch unit is slippery is not used in straddled vehicles. Oil with a small amount of a phosphorus compound is oil with which a clutch unit is slippery. Oil for automobiles, which includes a small amount of a phosphorus compound, is not used in the straddled vehicle. In other words, the engine unit of the straddled vehicle is specified to use oil including a large amount of a phosphorus compound as compared to an engine unit of an automobile. In other words, the straddled vehicle exhausts gas including more phosphorus, as compared to automobiles. The phosphorus adhesion reduction portion restrains adhesion of phosphorus to the catalyst layer. In other words, the phosphorus capturing layer and the phosphorus capturing structure which are the phosphorus adhesion reduction portion capture phosphorus and prevent phosphorus from being adhered to the catalyst layer of the upstream catalyst. In this way, variation in the purification performance of purifying the exhaust gas can be restrained in the straddled vehicle which exhausts gas including more phosphorus as compared to automobiles.

According to another aspect of the present teaching, the above-described straddled vehicle is arranged such that the engine unit is a natural air-cooled engine unit.

According to this arrangement, the temperature of the combustion chamber is high in the natural air-cooled engine unit. Due to this, a large amount of a phosphorus compound in oil is decomposed in the combustion chamber of the natural air-cooled engine unit as compared to a forced air-cooled engine unit and a water-cooled engine unit. Furthermore, exhaust gas including a large amount of phosphorus is exhausted from the natural air-cooled engine unit as compared to a forced air-cooled engine unit and a water-cooled engine unit. The phosphorus adhesion reduction portion restrains adhesion of phosphorus to the catalyst layer. In other words, the phosphorus capturing layer and the phosphorus capturing structure which are the phosphorus adhesion reduction portion capture phosphorus and prevent phosphorus from being adhered to the catalyst layer of the upstream catalyst. In this way, variation in the purification performance of purifying the exhaust gas can be restrained also in the straddled vehicle including the natural air-cooled engine unit.

According to another aspect of the present teaching, the straddled vehicle is arranged such that the oil is oil having an evaporation temperature higher than a temperature of a wall surface of the engine main body unit.

According to this arrangement, an amount of the phosphorus compound in the oil, which is decomposed in the combustion chamber, can therefore be restrained. The amount of phosphorus in the exhaust gas can therefore be restrained. In this way, variation in the purification performance of purifying the exhaust gas can be restrained in the straddled vehicle.

According to another aspect of the present teaching, the straddled vehicle is arranged such that a detecting element of the upstream oxygen detector includes an upstream oxygen detector catalyst layer including a noble metal and purifying the exhaust gas, and the upstream oxygen detector is provided between the phosphorus adhesion reduction portion and the upstream catalyst in the exhaust passage member.

According to this arrangement, the upstream oxygen detector includes the detecting element. The detecting element of the upstream oxygen detector includes the upstream oxygen detector catalyst layer. The upstream oxygen detector catalyst layer purifies the exhaust gas. The upstream oxygen detector catalyst layer includes a noble metal such as Pt-Rh, which is highly capable of combusting hydrogen in the exhaust gas. In other words, the upstream oxygen detector catalyst layer purifies the hydrogen in the exhaust gas. The upstream oxygen detector catalyst layer is provided at the detecting element of the upstream oxygen detector in order to restrain an influence of hydrogen. The influence of hydrogen is as follows. Because hydrogen is small in molecular weight and very rapidly diffuses, hydrogen tends to reach the detecting element of the upstream oxygen detector. An equilibration reaction of hydrogen occurs at electrodes of the detecting element, with the result that an output is disadvantageously shifted. The adhesion of phosphorus to the upstream oxygen detector catalyst layer occurs as in the catalyst layer. On account of the occurrence of vitrification of phosphorus, the detection accuracy of the upstream oxygen detector is deteriorated. The upstream oxygen detector is provided between the phosphorus adhesion reduction portion and the upstream catalyst in the exhaust passage member. The phosphorus adhesion reduction portion captures phosphorus in the exhaust gas. It is therefore possible to restrain an amount of phosphorus reaching the upstream oxygen detector catalyst layer of the upstream oxygen detector. Due to this, the detection accuracy of the upstream oxygen detector is improved.

According to another aspect of the present teaching, the above-described straddled vehicle is arranged such that the engine unit includes a downstream oxygen detector which is provided between the upstream catalyst and the discharge port in the exhaust passage member and is configured to detect the oxygen density of the exhaust gas.

According to this arrangement, the engine unit includes the downstream oxygen detector. The downstream oxygen detector is provided between the upstream catalyst and the discharge port in the exhaust passage member. The downstream oxygen detector is configured to detect the oxygen density of the exhaust gas. It is possible to control the engine unit based on the oxygen density of the exhaust gas detected by the downstream oxygen detector. Furthermore, it is possible to detect the deterioration in purification performance of purifying the exhaust gas of the straddled vehicle, based on the oxygen density of the exhaust gas detected by the downstream oxygen detector. This makes it possible to restrain variation in the purification performance of purifying the exhaust gas in the straddled vehicle.

According to another aspect of the present teaching, the straddled vehicle is arranged such that the upstream oxygen detector is provided at a location where a path length from the combustion chamber to the upstream oxygen detector is longer than a path length from the upstream oxygen detector to the upstream catalyst.

According to this arrangement, the upstream oxygen detector is provided at the location where the path length from the combustion chamber to the upstream oxygen detector is longer than the path length from the upstream oxygen detector to the upstream catalyst. The upstream oxygen detector is provided between the combustion chamber and the upstream catalyst in the exhaust passage member. Furthermore, the upstream oxygen detector is provided upstream of the upstream catalyst of the exhaust passage member in the flow direction of the exhaust gas. The upstream oxygen detector is provided at a location closer to the upstream catalyst than to the combustion chamber. The phosphorus adhesion reduction portion provided upstream of the upstream oxygen detector captures phosphorus included in the exhaust gas before passing the upstream oxygen detector. When the upstream oxygen detector is provided to be closer to the upstream catalyst than to the combustion chamber, the surface area of the phosphorus adhesion reduction portion provided upstream of the upstream oxygen detector is large as compared to cases where the upstream oxygen detector is provided to be closer to the combustion chamber than to the upstream catalyst. The phosphorus adhesion reduction portion provided upstream of the upstream oxygen detector is able to restrain an amount of phosphorus reaching the upstream oxygen detector. Due to this, phosphorus adhered to the upstream oxygen detector is restrained. The detection accuracy of the upstream oxygen detector is therefore improved.

According to another aspect of the present teaching, the straddled vehicle is arranged such that the exhaust passage member includes: a cylinder exhaust passage member which is formed in the cylinder member and is connected to the combustion chamber; a silencer including the discharge port; and an exhaust pipe connected to the cylinder exhaust passage member and the silencer, and the upstream oxygen detector is provided at a location where a path length from the upstream end of the exhaust pipe to the upstream oxygen detector is longer than a path length from the upstream oxygen detector to the upstream catalyst.

According to this arrangement, the exhaust passage member includes the cylinder exhaust passage member, the silencer, and the exhaust pipe. The cylinder exhaust passage member is formed in a cylinder having a combustion chamber. The cylinder exhaust passage member is connected to the combustion chamber. The silencer includes the discharge port. The exhaust pipe is connected to the cylinder exhaust passage member and the silencer. The upstream oxygen detector is provided at the location where the path length from the upstream end of the exhaust pipe to the upstream oxygen detector is longer than the path length from the upstream oxygen detector to the upstream catalyst. The upstream oxygen detector is provided between the combustion chamber and the upstream catalyst in the exhaust passage member. Furthermore, the upstream oxygen detector is provided upstream of the upstream catalyst of the exhaust passage member in the flow direction of the exhaust gas. The upstream oxygen upstream oxygen detector is provided at a location closer to the upstream catalyst than to the upstream end of the exhaust pipe. The phosphorus adhesion reduction portion provided upstream of the upstream oxygen detector captures phosphorus included in the exhaust gas before passing the upstream oxygen detector. When the upstream oxygen detector is provided to be closer to the upstream catalyst than to the upstream end of the exhaust pipe, the surface area of the phosphorus adhesion reduction portion provided upstream of the upstream oxygen detector is large as compared to cases where the upstream oxygen detector is provided to be closer to the upstream end of the exhaust pipe than to the upstream catalyst. The phosphorus adhesion reduction portion provided upstream of the upstream oxygen detector is able to restrain an amount of phosphorus reaching the upstream oxygen detector. Due to this, phosphorus adhered to the upstream oxygen detector is restrained. The detection accuracy of the upstream oxygen detector is therefore improved.

According to another aspect of the present teaching, the engine main body includes a crankshaft having a central axis extending along a vehicle left-right direction, and when the vehicle is viewed in the left-right direction, the catalyst layer is provided at least partially in front of a linear line which passes the central axis of the crankshaft and is parallel to an up-down direction.

A linear line which passes the central axis of the crankshaft and is parallel to the up-down direction when the vehicle is viewed in the left-right direction is termed a linear line LI. An exhaust pipe is typically connected to the front surface of the engine main body. When the vehicle is viewed in the left-right direction, the catalyst layer is provided at least partially in front of this linear line L1. Due to this, as compared to cases where the catalyst layer is entirely provided behind the linear line LI, the catalyst layer is provided to be close to the combustion chamber. It is therefore possible to shorten the time required for activating the catalyst layer, while preventing thermal degradation of the catalyst layer.

According to another aspect of the present teaching, the engine main body includes a crankshaft having a central axis extending along a vehicle left-right direction, the cylinder member has a cylinder hole which forms a part of the combustion chamber, and when the vehicle is viewed in the left-right direction, the catalyst layer is provided at least partially in front in a vehicle front-rear direction of a linear line which is orthogonal to a central axis of the cylinder hole and passes the central axis of the crankshaft.

A linear line which is orthogonal to the central axis of the cylinder hole and passes the central axis of the crankshaft when the vehicle is viewed in the left-right direction is termed a linear line L2. An exhaust pipe is typically connected to the front surface of the engine main body. When the vehicle is viewed in the left-right direction, the catalyst layer is provided at least partially in front of this linear line L2. Due to this, as compared to cases where the catalyst layer is entirely provided behind the linear line L2, the catalyst layer is provided to be close to the combustion chamber. The catalyst layer can be provided at a location close to the combustion chamber. It is therefore possible to shorten the time required for activating the catalyst layer, while preventing thermal degradation of the catalyst layer.

It should be noted that the straddled vehicle in the present teaching is not limited to the motorcycle. The straddled vehicle of the present teaching indicates all types of vehicles on which a rider rides in a manner of straddling a saddle. The straddled vehicle of the present teaching includes motorcycles, tricycles, four-wheeled buggies (ATVs: All Terrain Vehicles), personal water crafts, snowmobiles, and the like. A motorcycle which is a type of the straddled vehicle encompasses a scooter, an engine-equipped bicycle, a moped, or the like.

In the present teaching, the expression "the engine main body of the engine unit includes the cylinder member including the combustion chamber" is not limited to cases where the engine unit is a single-cylinder engine. The engine unit of the present teaching may be a single-cylinder engine or a multi-cylinder engine. The combustion chamber defined in claim 1 is referred to as a first combustion chamber. The engine unit of the present teaching may include one or more second combustion chambers in addition to the first combustion chamber. In such a case, the engine unit of the present teaching is a multi-cylinder engine. The number of the combustion chambers is not particularly limited. The combustion chamber of the present teaching can or cannot be replaced with the second combustion chamber. When there are plural second combustion chambers, only one or more of the second combustion chambers may substitute for the combustion chamber of the present teaching. When there are plural second combustion chambers, all of the second combustion chambers may substitute for the combustion chamber of the present teaching.

In the present teaching, the engine unit may be a natural air-cooled engine. The engine unit may be a forced air-cooled engine. The engine unit may be a water-cooled engine.

In the present teaching, the oxygen detector is, for example, an oxygen sensor. The oxygen sensor may only detect whether the oxygen density is above or below a predetermined value, or may linearly detect the oxygen density.

In the present teaching, a passage member indicates walls and the like which form a path by surrounding the path. A path is a space through which an object passes. The intake passage member indicates walls or the like which form an intake path by surrounding the intake path. The intake path indicates a space through which air passes. The exhaust passage member indicates walls or the like which form the exhaust path by surrounding the exhaust path. The exhaust path indicates a space through which exhaust gas passes.

In the present teaching, the upstream end of a member is the most upstream end of the member in the flow direction of the exhaust gas. Meanwhile, the downstream end of a member is the most downstream end of the member in the flow direction of the exhaust gas.

In this specification, the upstream end of the phosphorus chemical reaction portion is the most upstream end of the entire phosphorus chemical reaction portion in the flow direction of the exhaust gas. The upstream end of the catalyst layer is the most upstream end in the flow direction of the exhaust gas of the entire catalyst layer. Meanwhile, the downstream end of the phosphorus chemical reaction portion is the most downstream end of the entire phosphorus chemical reaction portion in the flow direction of the exhaust gas. The downstream end of the catalyst layer is the most downstream end in the flow direction of the exhaust gas of the entire catalyst layer.

In the present specification, an end portion of a member indicates a portion constituted by an end of the member and its surroundings.

In this specification, when the radial direction of a member B is used in an explanation of a member A, the radial direction of the member B is the radial direction of the member B, which passes the member A. The phrase "when the radial direction of a member B is used in an explanation of a member A" indicates, for example, cases where the member A is along the radial direction of the member B or the member A is pressed in the radial direction of the member B.

In this specification, unless otherwise specified, an inclination angle between linear lines A and B indicates a smaller one of angles between the linear lines A and B. This applies not only to the linear lines but also to the directions.

In this specification, a direction along an A direction is not limited to the direction in parallel to the A direction. The direction along the A direction includes a direction which intersects with the A direction at an angle which falls within the range from -45 degrees to 45 degrees. In the present teaching, a linear line along the A direction is not limited to a linear line in parallel to the A direction. The linear line along the A direction includes a linear line which intersects with the A direction at an angle which falls within the range from -45 degrees to 45 degrees. The direction A does not indicate any specific direction. The direction A may be the horizontal direction or the front-rear direction.

In this specification, an expression "members A and B are lined up in an X direction" indicates the following state. When the members A and B are viewed in any direction orthogonal to the X direction, the members A and B are both provided on a linear line which is along the X direction.

In this specification, an expression "members A and B are lined up in an X direction when viewed in a Y direction" indicates the following state. When the members A and B are viewed in the Y direction, the members A and B are both provided on a linear line which is along the X direction. When the members A and B are viewed in a direction different from the Y direction, the members A and B may not be lined up in the X direction.

In these two definitions, the members A and B may be in contact with each other. The members A and B may not be in contact with each other. A member C may be provided between the members A and B.

In this specification, an expression "a member A is provided forward of a member B" indicates the following state. The member A is provided in front of a plane which passes the front-most end of the member B and is orthogonal to the front-rear direction. In this connection, the members A and B may or may not be lined up in the front-rear direction. This applies to expressions "a member A is provided rearward of a member B", "a member A is provided above or below a member B", and "a member A is provided rightward of or leftward of a member B".

In this specification, an expression "a member A is provided in front of a member B" indicates the following state. The member A is provided forward of the member B and the members A and B are lined up in the front-rear direction. This applies to expressions "a member A is provided behind a member B", "a member A is provided directly above or below a member B", and "a member A is provided to the right of or to the left of a member B".

In this specification, an expression "a member A is provided in front of a member B when viewed in an X direction which is different from the front-rear direction" indicates the following state. The member A is provided forward of the member B and the members A and B are lined up in the front-rear direction when viewed in the X direction. When the members A and B are viewed in a Y direction different from the X direction, the members A and B may not be lined up in the X direction. This applies to expressions "a member A is provided behind a member B when viewed in the X direction", "a member A is provided directly above or below a member B when viewed in the X direction", and "a member A is provided to the right of or to the left of a member B when viewed in the X direction".

In the present teaching, the terms "including", "comprising", "having", and derivatives thereof are used to encompass not only listed items and equivalents thereof but also additional items.

In the present teaching, the terms "mounted", "connected", "coupled", and "supported" are used in a broad sense. To be more specific, the terms encompass not only directly mounting, connection, coupling, and supporting but also indirect mounting, connection, coupling, and supporting. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs.

Terms defined in typical dictionaries indicate meanings used in related technologies and in the context of the present disclosure. The terms are not interpreted ideally or excessively formally.

In this specification, the term "preferable" is non-exclusive. The term "preferable" means "preferable but not limited to". In this specification, an arrangement which is "preferable" exerts at least the above-described effect of the arrangement of one of the aspects of the present teaching. In this specification, the term "may" is non-exclusive. The term "may" indicate "may but not must". In this specification, an arrangement which is explained by using the term "may" exerts at least the above-described effect of the arrangement of one of the aspects of the present teaching.

In the present teaching, the arrangements of the above-described different aspects of the present teaching may be variously combined. Before an embodiment of the present teaching is detailed, it is informed that the present teaching is not limited to the configurations and layout of elements described below and/or shown in drawings. The present teaching may be implemented as an embodiment other than the below-described embodiment. The present teaching may be implemented as an embodiment other than the below-described embodiment. Furthermore, the present teaching may be implemented by suitably combining below-described modifications.

### [Advantageous Effects]

According to the present teaching, a straddled vehicle in which variation in purification performance of purifying exhaust gas can be restrained is provided.

### [Brief Description of Drawings]

[FIG. 1] FIG. 1 is a side view of a motorcycle of First Embodiment.
[FIG. 2] FIG. 2 is a plan view of an engine unit of the motorcycle shown in FIG. 1 and shows a part thereof in cross section.
[FIG. 3] FIG. 3 is a schematic diagram of the engine unit of the motorcycle of FIG. 1.
[FIG. 4] FIG. 4 is a control block diagram of the motorcycle of FIG. 1.
[FIG. 5] FIGs. 5(a) and 5(b) show an exhaust passage member, a phosphorus adhesion reduction portion, and an oxygen sensor of engine unit shown in FIG. 1. FIG. 5(a) is a partial cross section whereas FIG. 5(b) is a cross section taken along an X1-X1 line in FIG. 5(a).
[FIG. 6] FIGs. 6(a) and 6(b) show the oxygen sensor of FIG. 1. FIG. 6(a) is a partial cross section of the oxygen sensor, whereas FIG. 6(b) is a partial cross section of a leading end portion of a detecting element.
[FIG. 7] FIGs. 7(a) and 7(b) show an upstream catalyst shown in FIG. 1. FIG. 7(a) schematically shows the structure of each layer of the upstream catalyst, whereas FIG. 7(b) is a partial cross section of the upstream catalyst taken along the line orthogonal to the flow direction of the exhaust gas.
[FIG. 8] FIGs. 8(a) and 8(b) show a modification of the upstream catalyst shown in FIG. 1. FIG. 8(a) schematically shows the structure of each layer of the upstream catalyst, whereas FIG. 8(b) is a partial cross section of the upstream catalyst taken along the line orthogonal to the flow direction of the exhaust gas.
[FIG. 9] FIGs. 9(a) and 9(b) show an exhaust passage member, a phosphorus adhesion reduction portion, and an oxygen sensor of an engine unit of a motorcycle of Second Embodiment. FIG. 9(a) is a partial cross section whereas FIG. 9(b) is a cross section taken along a line X2-X2 in FIG. 9(a).
[FIG. 10] FIG. 10 is a schematic diagram of the exhaust passage member, the phosphorus adhesion reduction portion, the oxygen sensor, and an upstream catalyst of the engine unit of Second Embodiment.
[FIG. 11] FIGs. 11(a) and 11(b) show an exhaust passage member, a phosphorus adhesion reduction portion, and an oxygen sensor of an engine unit of Third Embodiment. FIG. 11(a) is a partial cross section whereas FIG. 11(b) is a cross section taken along a line X3-X3 in FIG. 11(a).
[FIG. 12] FIGs. 12(a) and 12(b) show an exhaust passage member, a phosphorus adhesion reduction portion, and an oxygen sensor of an engine unit of Fourth Embodiment. FIG. 12(a) is a partial cross section whereas FIG. 12(b) is a cross section taken along a line X4-X4 in FIG. 12(a).
[FIG. 13] FIG. 13 is a schematic diagram of the exhaust passage member, the phosphorus adhesion reduction portion, the oxygen sensor, and an upstream catalyst of the engine unit of Fourth Embodiment.
[FIG. 14] Each of FIG. 14(a) and FIG. 14(b) is a schematic diagram of an exhaust passage member, a phosphorus adhesion reduction portion, an oxygen sensor, and a catalyst of an engine unit of a modification.
[FIG. 15] FIG. 15 is a schematic diagram of a straddled vehicle of an embodiment.
[FIG. 16] Each of FIGs. 16(a) and 16(b) is a schematic cross section of an upstream catalyst, which shows an example of a catalyst layer of the embodiment.

### [Description of Embodiments]

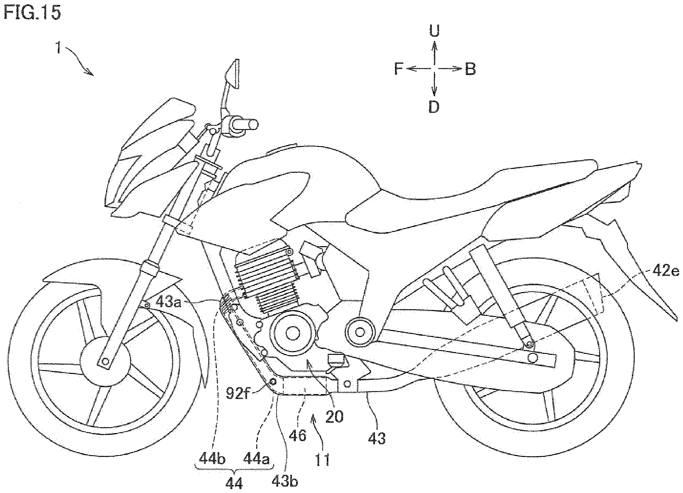

The following describes an embodiment of the present teaching with reference to FIG. 15.

An engine unit 11 is mounted on a straddled vehicle 1. The engine unit 11 includes an engine main body 20, an exhaust passage member 43, and an upstream catalyst 46, an upstream oxygen sensor 92f, and a phosphorus adhesion reduction portion 44. The engine main body 20 includes a combustion chamber 36.

The exhaust passage member 43 is provided with a discharge port 42e through which exhaust gas is discharged to the atmosphere. The exhaust passage member 43 allows the exhaust gas to flow from the combustion chamber 36 to the discharge port 42e. The exhaust passage member 43 includes a first bending portion 43a and a second bending portion 43b which are provided between the combustion chamber 36 and the upstream catalyst 46.

The upstream catalyst 46 is the most upstream catalyst in the exhaust passage member 43 in the direction in which the exhaust gas flows. The upstream catalyst 46 includes a catalyst layer 49. The catalyst layer 49 includes a noble metal which purifies the exhaust gas.

The upstream oxygen sensor 92f is provided between the combustion chamber 36 and the upstream catalyst 46 in the exhaust passage member 43. The upstream oxygen sensor 92f is configured to detect the oxygen density of the exhaust gas.

The phosphorus adhesion reduction portion 44 includes at least one of a phosphorus capturing layer 44a or a phosphorus capturing structure 44b.

The phosphorus capturing layer 44a is provided between the combustion chambers 36 and the upstream catalyst 46 in the exhaust passage member 43. The phosphorus capturing layer 44a is constituted by a phosphorus reactant chemically reacting with phosphorus in order to have a function of capturing phosphorus. Alternatively, a surface of the phosphorus capturing layer 44a is constituted by a rough surface in order to have a function of capturing phosphorus. The phosphorus capturing layer 44a is applied to the inner surface of the exhaust passage member 43.

The phosphorus capturing structure 44b is provided between the combustion chambers 36 and the upstream catalyst 46 in the exhaust passage member 43. The phosphorus capturing structure 44b has a function of capturing phosphorus by decreasing the flow rate of the exhaust gas. The phosphorus capturing structure 44b is provided at a location where the path length from the combustion chamber 36 to the phosphorus capturing structure 44b is shorter than the path length from the phosphorus capturing structure 44b to the upstream catalyst 46.

The straddled vehicle 1 of the present embodiment has the following characteristics.

The upstream catalyst 46 is provided at a location closest to the combustion chamber 36. This arrangement is able to shorten the time required to activate the upstream catalyst 46. The purification performance of purifying the exhaust gas of the straddled vehicle 1 can therefore be improved.

The phosphorus adhesion reduction portion 44 restrains adhesion of phosphorus to the catalyst layer 49. The phosphorus adhesion reduction portion 44 includes at least one of (A) the phosphorus capturing layer 44a or (B) the phosphorus capturing structure 44b.
(A) The phosphorus capturing layer 44a is provided between the combustion chamber 36 and the upstream catalyst 46 in the exhaust passage member 43. In other words, the phosphorus capturing layer 44a is provided upstream of the upstream catalyst 46 in the flow direction of the exhaust gas. The phosphorus capturing layer 44a is applied to the inner surface of the exhaust passage member 43. The phosphorus capturing layer 44a is constituted by a phosphorus reactant chemically reacting with phosphorus in order to have a function of capturing phosphorus. Alternatively, a surface of the phosphorus capturing layer 44a is constituted by a rough surface in order to have a function of capturing phosphorus. The exhaust passage member 43 includes the first bending portion 43a and the second bending portion 43b which are provided between the combustion chamber 36 and the upstream catalyst 46. Because the flow rate of the exhaust gas is high, the exhaust gas tends to collide with the first bending portion 43a and the second bending portion 43b of the exhaust passage member 43. Due to this, the phosphorus tends to be adhered to the first bending portion 43a and the second bending portion 43b of the exhaust passage member 43. The phosphorus capturing layer 44a is provided between the combustion chamber 36 and the upstream catalyst 46 in the exhaust passage member 43. The phosphorus capturing layer 44a includes a phosphorus reactant which chemically reacts with phosphorus in the exhaust gas. The phosphorus in the exhaust gas passing the phosphorus capturing layer 44a chemically reacts with the phosphorus reactant. The phosphorus reactant is a substance adsorbing phosphorus, for example. In this case, the phosphorus in the exhaust gas is adsorbed as the phosphorus in the exhaust gas chemically reacts with the phosphorus reactant. The phosphorus reactant is able to capture the phosphorus as the reactant chemically reacts with the phosphorus in the exhaust gas passing the phosphorus capturing layer 44a. Alternatively, a surface of the phosphorus capturing layer 44a is constituted by a rough surface to which phosphorus included in the exhaust gas is adhered. The phosphorus capturing layer 44a is therefore able to capture the phosphorus and prevents the phosphorus from being adhered to the catalyst layer 49 of the upstream catalyst 46.
(B) The phosphorus capturing structure 44b is provided between the combustion chamber 36 and the upstream catalyst 46 in the exhaust passage member 43. In other words, the phosphorus capturing structure 44b is provided upstream of the upstream catalyst 46 in the flow direction of the exhaust gas. The phosphorus capturing structure 44b has a function of capturing phosphorus by decreasing the flow rate of the exhaust gas. Because the flow rate of the exhaust gas is high, the flow rate of the exhaust gas can be decreased when the structure is provided in the exhaust passage member 43. Phosphorus tends to be adhered to the structure which decreases the flow rate of the exhaust gas. The path length from the combustion chamber 36 to the phosphorus capturing structure 44b is shorter than the path length from the phosphorus capturing structure 44b to the upstream catalyst 46. In other words, the phosphorus capturing structure 44b is provided to be close to the combustion chamber 36. The phosphorus capturing structure 44b decreases the flow rate of the exhaust gas to cause phosphorus in the exhaust gas to be adhered thereto. The phosphorus capturing structure 44b is therefore able to capture the phosphorus and prevents the phosphorus from being adhered to the catalyst layer 49 of the upstream catalyst 46.

In this way, variation in the purification performance of purifying the exhaust gas can be restrained in the straddled vehicle 1.

### (Specific Examples of Embodiment of Present Teaching)

The following describes a specific example of the above-described embodiment of the present teaching. An explanation is given with the assumption that the straddled vehicle 1 of the embodiment of the present teaching is a motorcycle. It is noted that items identical with those in the embodiment above of the present teaching are not explained again. The specific example of the embodiment of the present teaching basically encompasses the entirety of the above-described embodiment of the present teaching. Hereinafter, a front-rear direction is a vehicle front-rear direction for a rider seated on a below-described seat 9 of the motorcycle 1. A left-right direction is a vehicle left-right direction for the rider seated on the seat 9. A vehicle left-right direction is identical with a vehicle width direction. In each figure related to the embodiment, arrows F, B, U, D, L, and R indicate forward, rearward, upward, downward, leftward, and rightward, respectively.

### (First Embodiment)

### [Overall Structure of Motorcycle]

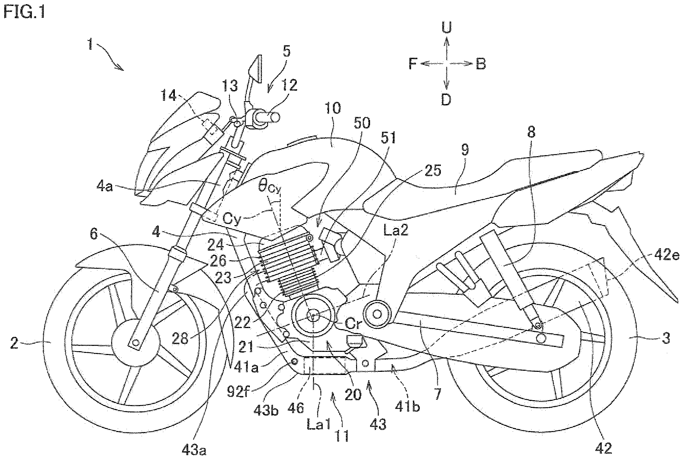

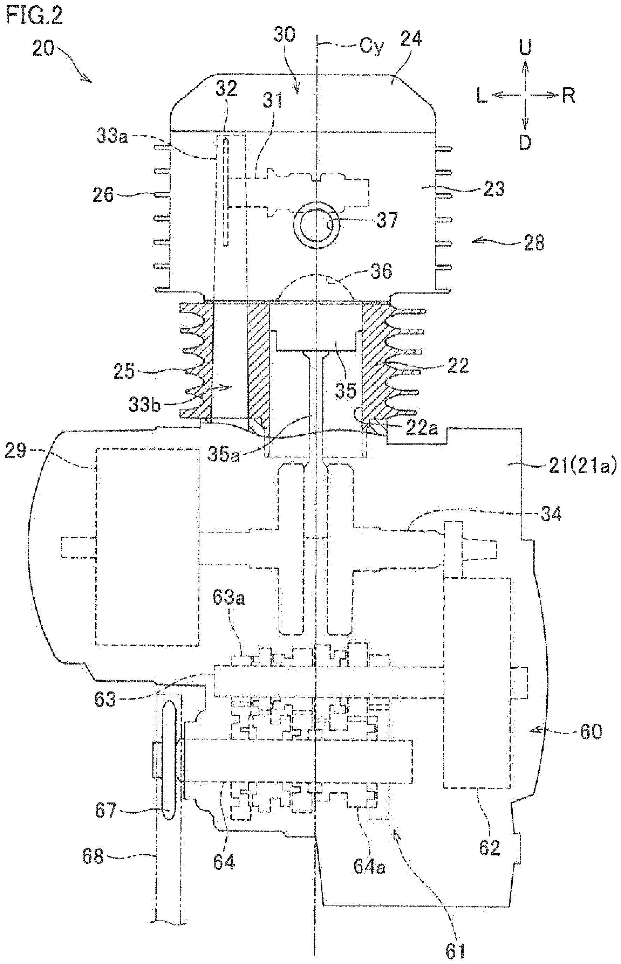

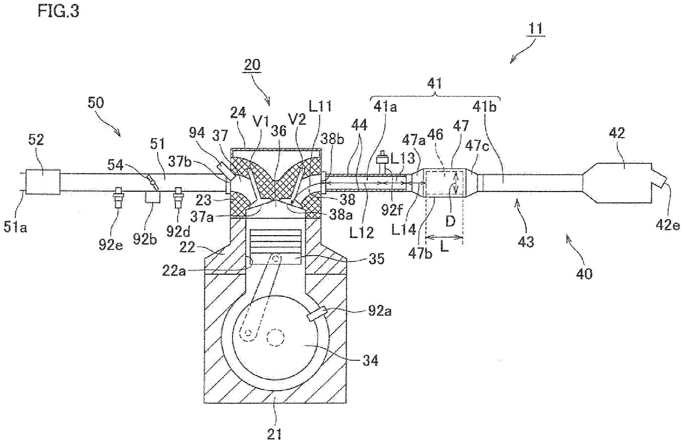

The following will describe First Embodiment which is a first specific example of the embodiment of the present teaching, with reference to FIG. 1 to FIG. 7 and FIG. 15. To begin with, the overall structure of a motorcycle of First Embodiment of the present teaching will be described. FIG. 1 is a side view of the motorcycle of First Embodiment. FIG. 2 is a plan view of an engine unit of the motorcycle shown in FIG. 1 and shows a part thereof in cross section. FIG. 3 is a schematic diagram of the engine unit of the motorcycle of FIG. 1.

The motorcycle 1 of First Embodiment is a so-called sports motorcycle. The engine unit of the present embodiment may be used in an on-road-type motorcycle or an off-road-type motorcycle. As shown in FIG. 1, the motorcycle 1 includes a front wheel 2, a rear wheel 3, and a vehicle body frame 4. The vehicle body frame 4 includes a head pipe 4a. The vehicle body frame 4 is provided to extend along the front-rear direction. While FIG. 1 shows one front wheel 2, the number of the front wheels 2 may be two or more. While FIG. 1 shows one rear wheel 3, the number of the rear wheels 3 may be two or more.

The head pipe 4a is provided at a front portion of the vehicle body frame 4. A steering shaft (not illustrated) is rotatably inserted into the head pipe 4a. A handle unit 5 is provided at an upper part of the steering shaft. The handle unit 5 includes a handlebar 12. Grips 13 are provided at left and right ends of the handlebar 12, respectively. A display 14 is provided in the vicinity of the handle unit 5. The display 14 is configured to display vehicle speed, engine rotation speed, warnings, and the like.

Paired left and right front forks 6 are supported at a lower part of the steering shaft. The lower end portions of the front forks 6 support the front wheel 2 in a rotatable manner. Each front fork 6 is configured to absorb shock in the up-down direction. Paired swingarms 7 are swingably supported by the vehicle body frame 4. Rear end portions of the swingarms 7 support the rear wheel 3. A rear suspension 8 is attached to each swingarm 7. One end portion of the rear suspension 8 is attached to a part rearward of the swing center of the swingarm 7. The rear suspension 8 is configured to absorb shock in the up-down direction.

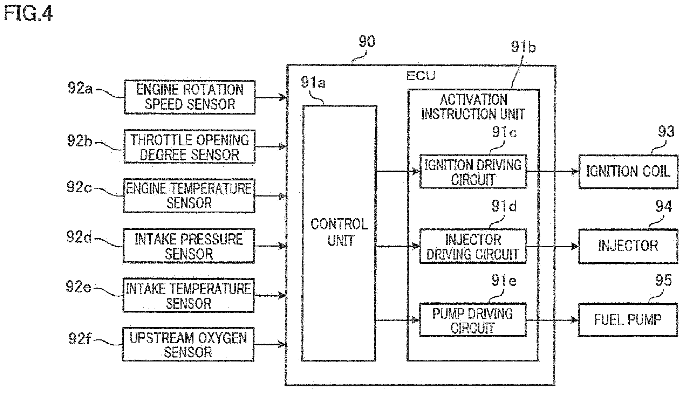

The vehicle body frame 4 supports the seat 9 and a fuel tank 10. The fuel tank 10 is provided in front of the seat 9. The vehicle body frame 4 supports the engine unit 11. The engine unit 11 may be directly or indirectly connected to the vehicle body frame 4. The engine unit 11 is provided directly below the fuel tank 10. When viewed in the left-right direction, the engine unit 11 is provided behind the front wheel 2 and in front of the rear wheel 3. The vehicle body frame 4 supports a battery (not illustrated). The battery is configured to supply power to electronic devices such as an ECU (Electronic Control Unit) 90 (see FIG. 4) controlling the engine unit 11 and sensors.

### [Structure of Engine Unit]

The engine unit 11 is a natural air-cooled engine. The engine unit 11 is a single-cylinder engine. The engine unit 11 is a four-stroke engine. The four-stroke type engine is an engine that repeats an intake process, a compression process, a combustion process (expansion stroke), and an exhaust process. The engine unit 11 includes the engine main body 20, an exhauster 40, and a power transmission unit 60 (see FIG. 2). The exhauster 40 includes the exhaust passage member 43, the phosphorus adhesion reduction portion 44 (see FIG. 3), and the catalyst (upstream catalyst) 46. Furthermore, the engine unit 11 includes an upstream oxygen sensor (upstream oxygen detector) 92f. The engine unit 11 includes an intake device 50 (see FIG. 3). The upstream catalyst 46 is the most upstream catalyst in the exhaust passage member 43 in the direction in which the exhaust gas flows.

### [Structure of Engine Main Body]

The engine main body 20 includes a crankcase member 21, a cylinder member 28, a generator 29, and a starter motor (not illustrated). The cylinder member 28 includes a cylinder body 22, a cylinder head 23, and a head cover 24. As shown in FIG. 2, the crankcase member 21 includes a crankcase 21a, a crankshaft 34, and an oil pan (not illustrated). The crankcase 21a and the oil pan may be integrally formed. The crankcase 21a houses the power transmission unit 60, the generator 29, and the starter motor. The crankcase 21a houses the crankshaft 34. The crankshaft 34 is rotatably supported by the crankcase member 21. The central axis Cr of the crankshaft 34 will be referred to as a crankshaft axis Cr. The crankshaft axis Cr extends along the left-right direction. More specifically, the crankshaft axis Cr is parallel to the left-right direction. The generator 29 is attached to a left end portion of the crankshaft 34.

The crankcase 21a houses the power transmission unit 60. The power transmission unit 60 is connected to a right end portion of the crankshaft 34. In FIG. 2, only some of the components of the power transmission unit 60 are indicated by dotted lines. The power transmission unit 60 includes a transmission unit 61 and a clutch unit 62. The transmission unit 61 is a stepped transmission composed of a main shaft 63 and a drive shaft 64. The crankshaft 34 is connected to the main shaft 63 via the clutch unit 62. The clutch unit 62 is configured to switch between a state in which the crankshaft 34 is connected to the main shaft 63 to be able to transmit power and a state in which the shafts are disconnected.

The main shaft 63 is provided with shift gears 63a. The drive shaft 64 is provided with shift gears 64a. From the shift gears 63a and the shift gears 64a, a pair of gears are selected to achieve a predetermined transmission ratio. The gears of the selected pair are engaged with each other to allow power transmission from the main shaft 63 to the drive shaft 64. Apart from the selected gears, either the shift gears 63a or the shift gears 64a are attached to the main shaft 63 or the drive shaft 64 in an idling state. To put it differently, the power transmission from the main shaft 63 to the drive shaft 64 is performed only by the shift gears of the selected pair. The shift gears 63a and the shift gears 64a constitute a power transmission mechanism.

A left end portion of the drive shaft 64 protrudes to the outside from the crankcase 21a. A sprocket 67 is provided at a left end portion of the drive shaft 64. A chain 68 is wound onto this sprocket 67 of the drive shaft 64 and a sprocket (not illustrated) of the rear wheel 3. By the chain 68, the power is transmitted from the drive shaft 64 to the rear wheel 3.

Oil is stored in the oil pan. The oil is specified as oil in which the content of a phosphorus compound is larger than 0.08mass%. The crankcase member 21 includes an oil pump (not illustrated) which sucks up the oil stored in the oil pan. The oil sucked up by the oil pump lubricates the inside of the crankcase member 21. The crankcase member 21 communicates with a chain chamber 33b of the cylinder body 22 and a chain chamber 33a of the cylinder head 23, which will be described later. The oil is circulated in the chain chamber 33b of the cylinder body 22 and the chain chamber 33a of the cylinder head 23. The oil lubricates a later-described valve operating mechanism 30 which is housed in the cylinder head 23 of the cylinder member 28. A part of the engine main body 20 and a part of the transmission unit 61 are housed in the crankcase member 21. A part of the engine main body 20 is lubricated by the oil. A part of the transmission unit 61 is lubricated by the oil. In other words, the oil lubricating the engine main body 20 is identical with the oil lubricating the transmission unit 61. A part of the engine main body 20 and the clutch unit 62 are housed in the crankcase member 21. A part of the engine main body 20 is lubricated by the oil. The clutch unit 62 is lubricated by the oil. In other words, the oil lubricating the engine main body 20 is identical with the oil lubricating the clutch unit 62. The oil lubricating the engine main body 20 preferably has an evaporation temperature higher than the wall surface temperature of the engine main body 20.

The cylinder member 28 includes the cylinder body 22, the cylinder head 23, and the head cover 24, as described above. The cylinder body 22 is attached to an upper end portion of the crankcase member 21. The cylinder head 23 is attached to an upper end portion of the cylinder body 22. The head cover 24 is attached to an upper end portion of the cylinder head 23. A fin portion 25 is formed on the surface of the cylinder body 22. The fin portion 25 is formed on the substantially entirety of the outer periphery of the cylinder body 22. A fin portion 26 is formed on the surface of the cylinder head 23. The fin portion 26 is formed on the substantially entirety of the outer periphery of the cylinder head 23. The fin portions 25 and 26 are composed of a plurality of fins. The fin portions 25 and 26 radiate heat generated by the engine main body 20.

A cylinder hole 22a is formed in the cylinder body 22. The cylinder hole 22a houses a piston 35 so that the piston 35 is able to reciprocate. The piston 35 is connected to the crankshaft 34 via a connecting rod 35a. Hereinafter, the central axis of the cylinder hole 22a will be referred to as a cylinder axis Cy. As shown in FIG. 1, the cylinder axis Cy extends along the up-down direction. When the motorcycle 1 is viewed in the left-right direction, the cylinder axis Cy is inclined in the front-rear direction with respect to the up-down direction. The cylinder axis Cy is inclined so that the cylinder member 28 is tilted forward. In other words, the cylinder axis Cy is inclined with a negative slope in the forward direction. When the motorcycle 1 is viewed in the left-right direction, an inclination angle formed between the cylinder axis Cy and the up-down direction is termed an inclination angle θcy. The inclination angle θcy is 0 degree or greater and 45 degrees or less. The inclination angle θcy is not limited to the angle shown in FIG. 1.

As shown in FIG. 2, the combustion chambers 36 are formed in the cylinder member 28. Each combustion chamber 36 is formed by the bottom surface of the cylinder head 23, the cylinder hole 22a, and the top surface of the piston 35. Each combustion chamber 36 may include a main combustion chamber and an auxiliary combustion chamber connected with the main combustion chamber. As shown in FIG. 1, a linear line which passes the crankshaft axis Cr and is parallel to the up-down direction when the motorcycle 1 is viewed in the left-right direction is termed a linear line La1. When the motorcycle 1 is viewed in the left-right direction, the combustion chambers 36 are positioned in front of the linear line La1. In other words, when the motorcycle 1 is viewed in the left-right direction, the combustion chambers 36 are positioned in front of the crankshaft axis Cr.

As shown in FIG. 3, a cylinder intake passage member 37 and a cylinder exhaust passage member 38 are formed in the cylinder head 23. In this specification, a passage member is a structure forming a path. A path is a space through which gas or the like passes. In the cylinder head 23, an intake port 37a and an exhaust port 38a are formed in a wall portion forming the combustion chamber 36. One intake port 37a and one exhaust port 38a are provided for one combustion chamber 36. Alternatively, two or more intake ports 37a may be provided for one combustion chamber 36. For example, when two intake ports 37a are provided for one combustion chamber 36, the cylinder intake passage member 37 is forked in two. Furthermore, two or more exhaust ports 38a may be provided for one combustion chamber 36. For example, when two exhaust ports 38a are provided for one combustion chamber 36, the cylinder exhaust passage member 38 is forked in two. An inlet 37b is formed in the rear outer surface of the cylinder head 23. An outlet 38b is formed in the front outer surface of the cylinder head 23. The cylinder intake passage member 37 extends from the intake port 37a to the inlet 37b. One inlet 37b and one outlet 38b are provided for one combustion chamber 36. Alternatively, two or more inlets 37b may be provided for one combustion chamber 36. Furthermore, two or more outlets 38b may be provided for one combustion chamber 36. The cylinder exhaust passage member 38 extends from the exhaust port 38a to the outlet 38b. Air supplied to the combustion chamber 36 passes through the inside of the cylinder intake passage member 37. Exhaust gas exhausted from the combustion chamber 36 passes through the cylinder exhaust passage member 38.

An intake valve V1 is provided in the cylinder intake passage member 37. An exhaust valve V2 is provided in the cylinder exhaust passage member 38. The intake port 37a is opened and closed by the driving of the intake valve V1. The exhaust port 38a is opened and closed by the driving of the exhaust valve V2. A later-described intake passage member 51 is connected to the inlet 37b of the cylinder intake passage member 37. A later-described exhaust pipe 41 is connected to the outlet 38b of the cylinder exhaust passage member 38.

As shown in FIG. 2, the cylinder head 23 houses the valve operating mechanism 30. The valve operating mechanism 30 is configured to open and close the intake valve V1 and the exhaust valve V2. The valve operating mechanism 30 includes a cam shaft 31. The cam shaft 31 is provided to extend in the left-right direction. The cam shaft 31 is rotatably supported by the cylinder head 23. The chain chamber 33a is provided in the cylinder head 23. The chain chamber 33b is provided in the cylinder body 22. The chain chamber 33a of the cylinder head 23 communicates with the chain chamber 33b of the cylinder body 22. A left end portion of the cam shaft 31 is provided in the chain chamber 33b. A sprocket 32 is provided at a left end portion of the cam shaft 31. Furthermore, a non-illustrated sprocket is provided at a left end portion of the crankshaft 34. A timing chain (not illustrated) is wound onto the sprocket 32 and the sprocket of the crankshaft 34. The timing chain is provided in the chain chamber 33a of the cylinder head 23 and the chain chamber 33b of the cylinder body 22. The timing chain transmits the rotation of the crankshaft 34 to the valve operating mechanism 30. The cam shaft 31 rotates in accordance with the rotation of the crankshaft 34. As the cam shaft 31 rotates, the intake valve V1 and the exhaust valve V2 are driven to open or close.

As shown in FIG. 3, the engine main body 20 includes an engine rotation speed sensor 92a and an engine temperature sensor 92c (see FIG. 4). The engine rotation speed sensor 92a is configured to detect the rotation speed of the crankshaft 34, i.e., the engine rotation speed. In other words, the engine temperature sensor 92c detects the temperature of the engine main body 20 (i.e., the temperature of the cylinder body 22).

### [Structure of Intake Device]

The following describes the intake device 50 of the motorcycle 1 of First Embodiment. In the description of the intake device 50 in this specification, the term "upstream" indicates upstream in the direction in which air flows. The term "downstream" indicates downstream in the direction in which air flows.

As shown in FIG. 3, the intake device 50 includes an intake passage member 51. The intake passage member 51 is provided with an atmosphere suction port 51a which faces the atmosphere. The atmosphere suction port 51a is provided at the upstream end of the intake passage member 51. The intake passage member 51 includes an air cleaner 52 which is configured to purify air. The downstream end of the intake passage member 51 is connected to the inlet 37b which is formed in the rear surface of the cylinder head 23. The atmosphere suction port 51a allows air to be sucked from the atmosphere. The air flowing into the intake passage member 51 through the atmosphere suction port 51a is supplied to the engine main body 20.

An injector 94 is provided in the intake passage member 51. The injector 94 is configured to inject fuel to the air in the intake passage member 51. The injector 94 is connected to a fuel tank (not illustrated) via a fuel hose (not illustrated). A fuel pump 95 (see FIG. 4) is provided inside the fuel tank. The fuel pump 95 supplies fuel in the fuel tank to the fuel hose with a pressure.

A throttle valve 54 is provided in the intake passage member 51. The opening degree of the throttle valve 54 is changed as the rider rotationally operates an accelerator grip (not illustrated).

A throttle opening degree sensor (throttle position sensor) 92b, an intake pressure sensor 92d, and an intake temperature sensor 92e are provided in the intake passage member 51. The throttle opening degree sensor 92b is configured to detect the position of the throttle valve 54 and output a signal indicating the throttle opening degree. The throttle opening degree is the opening degree of the throttle valve 54. The intake pressure sensor 92d is configured to detect the pressure in the intake passage member 51. The intake temperature sensor 92e is configured to detect the temperature of air in the intake passage member 51.

### [Structure of Exhauster]

The following describes the exhauster 40 of the motorcycle 1 of First Embodiment. In the description of the exhauster 40 in this specification, the term "upstream" indicates upstream in the direction in which exhaust gas flows. The term "downstream" indicates downstream in the direction in which exhaust gas flows.

As shown in FIG. 1 and FIG. 3, the exhauster 40 includes the exhaust passage member 43, the phosphorus adhesion reduction portion 44, and the catalyst 46. In other words, the engine unit 11 includes the exhaust passage member 43, the phosphorus adhesion reduction portion 44, and the catalyst 46. The exhaust passage member 43 includes the above-described cylinder exhaust passage member 38, the exhaust pipe 41, a silencer 42, and a casing 47. The silencer 42 is provided with the discharge port 42e which faces the atmosphere. The exhaust passage member 43 is a structure which forms a space in which the exhaust gas flows from the combustion chamber 36 to the discharge port 42e.

The exhaust pipe 41 includes an upstream exhaust pipe 41a and a downstream exhaust pipe 41b. The upstream exhaust pipe 41a is provided upstream of the casing 47. The downstream exhaust pipe 41b is provided downstream of the casing 47. An upstream end portion of the upstream exhaust pipe 41a is connected to the cylinder exhaust passage member 38. The upstream end portion of the upstream exhaust pipe 41a may be inserted into the cylinder exhaust passage member 38. The exhaust gas flows into the upstream end portion of the upstream exhaust pipe 41a. A downstream end portion of the exhaust pipe downstream exhaust pipe 41b is inserted into and provided in the silencer 42. While FIG. 3 depicts the upstream exhaust pipe 41a and the downstream exhaust pipe 41b as pipes on the same linear line for the sake of simplicity, the upstream exhaust pipe 41a and the downstream exhaust pipe 41b are actually not pipes on the same linear line.

The exhaust passage member 43 includes the first bending portion 43a and the second bending portion 43b which are provided between the combustion chamber 36 and the upstream catalyst 46. An upstream oxygen sensor 92f is provided on the exhaust passage member 43, between the combustion chambers 36 and the upstream catalyst 46. To be more specific, the upstream oxygen sensor 92f is provided on the upstream exhaust pipe 41a. The upstream oxygen sensor 92f is provided upstream of the later-described catalyst 46 in the exhaust passage member 43. As shown in FIG. 3, the path length from the combustion chamber 36 to the upstream end of the exhaust pipe 41 is referred to as L11. The path length from the upstream end of the exhaust pipe 41 to the upstream oxygen sensor 92f is referred to as L12. The path length from the upstream end of the exhaust pipe 41 to the downstream end of the exhaust pipe 41 is referred to as L13. The path length from the downstream end of the exhaust pipe 41 to the upstream catalyst 46 is referred to as L14. The upstream oxygen sensor 92f is provided at a location where the path length L11+L12 from the combustion chamber 36 to the upstream oxygen sensor 92f is longer than the path length L13+L14 from the upstream oxygen sensor 92f to the upstream catalyst 46. In other words, the upstream oxygen sensor 92f is provided at a location closer to the upstream catalyst 46 than to the combustion chamber 36. Furthermore, the upstream oxygen sensor 92f is provided at a location where the path length L12 from the exhaust pipe 41 to the upstream oxygen sensor 92f is longer than the path length L13+L14 from the upstream oxygen sensor 92f to the upstream catalyst 46. In other words, the upstream oxygen sensor 92f is provided at a location closer to the upstream catalyst 46 than to the upstream end of the upstream exhaust pipe 41a. Furthermore, the upstream oxygen sensor 92f is provided at a location where the path length L12 from the upstream end of the upstream exhaust pipe 41a to the upstream oxygen sensor 92f is longer than the path length L13 from the upstream oxygen sensor 92f to the downstream end of the upstream exhaust pipe 41a, In other words, the upstream oxygen sensor 92f is provided at a location closer to the downstream end than to the upstream end of the upstream exhaust pipe 41a. The upstream oxygen sensor 92f is configured to detect the oxygen density in the exhaust gas passing the upstream exhaust pipe 41a of the exhaust passage member 43.

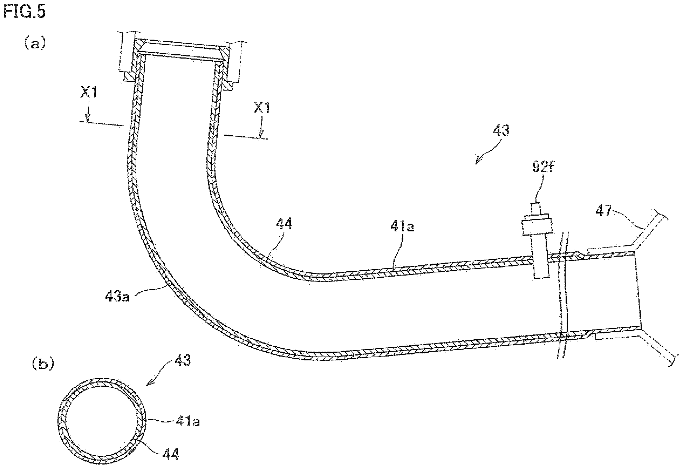

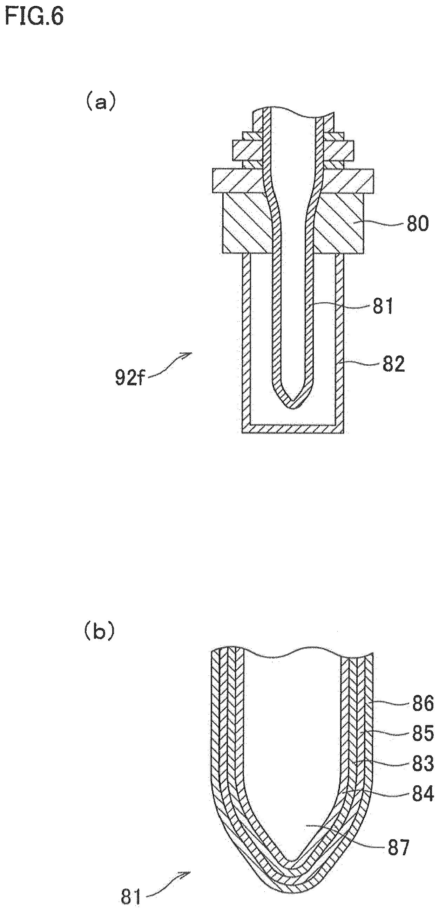

An example of the structure of the upstream oxygen sensor 92f is described with reference to FIG. 6. FIG. 6(a) is a partial cross section of the oxygen sensor. FIG. 6(b) is a partial cross section of a leading end portion of a detecting element. As shown in FIG. 6(a), the upstream oxygen sensor 92f includes a detecting element 81 therein. The detecting element 81 is inserted into a housing 80 and fixed thereto. The detecting element 81 is provided inside a cover 82. The detecting element 81 is protected by the cover 82. The cover 82 has a passing hole (not illustrated) which allows the exhaust gas to pass therethrough. As shown in FIG. 6(b), the detecting element 81 includes a solid electrolyte body 83, an inner electrode 84, an outer electrode 85, and an oxygen sensor catalyst layer (oxygen detector catalyst layer) 86. The solid electrolyte body 83 is formed to be a bottomed cylinder in shape. The inner electrode 84 and the outer electrode 85 are paired electrodes. The paired electrodes 84 and 85 are provided on the respective surfaces of the solid electrolyte body 83. The inner surface of the solid electrolyte body 83 is coated with the inner electrode 84. The outer surface of the solid electrolyte body 83 is coated with the outer electrode 85. The oxygen sensor catalyst layer 86 is stacked on the outer surface of the outer electrode 85. The oxygen sensor catalyst layer 86 is made of a noble metal alloy such as Pt-Rh, which is highly capable of combusting hydrogen. The oxygen sensor catalyst layer 86 is able to restrain an influence of hydrogen. An atmosphere chamber 87 to which the atmosphere is introduced is formed in the detecting element 81. The atmosphere chamber 87 is formed inside the inner electrode 84. The inner electrode 84 is exposed to the atmosphere. The atmosphere is used as standard gas. The outer electrode 85 is exposed to the exhaust gas. As shown in FIG. 3 and FIG. 5, the upstream oxygen sensor 92f is provided at a location closer to the downstream end than to the upstream end of the upstream exhaust pipe 41a. In other words, the distance from the upstream oxygen sensor 92f to the upstream end of the upstream exhaust pipe 41a is longer than the distance from the upstream oxygen sensor 92f to the downstream end of the upstream exhaust pipe 41a.

The upstream oxygen sensor 92f may be a linear A/F sensor. The linear A/F sensor is configured to output a detection signal linearly corresponding to the oxygen density of the exhaust gas. To put it differently, the linear A/F sensor linearly detects changes of the oxygen density in the exhaust gas. Being similar to the upstream oxygen sensor 92f, the linear A/F sensor may include an oxygen sensor catalyst layer.

The exhaust gas exhausted from a downstream end portion of the downstream exhaust pipe 41b flows into the silencer 42. The silencer 42 is configured to restrain pulsation in the exhaust gas. With this, the silencer 42 is configured to restrain the volume of the sound (exhaust sound) generated by the exhaust gas. Plural expansion chambers and plural pipes connecting the expansion chambers with one another are provided inside the silencer 42. The downstream end of the downstream exhaust pipe 41b is provided inside an expansion chamber of the silencer 42. The downstream end portion of the downstream exhaust pipe 41b may be connected to the upstream end of the silencer 42. The discharge port 42e is provided at the downstream end of the silencer 42. The exhaust gas having passed the silencer 42 is discharged to the atmosphere via the discharge port 42e. As shown in FIG. 2, the discharge port 42e is positioned rearward of the crankshaft axis Cr. The silencer 42 is supported by the vehicle body frame 4 via a connecting member 42c. The silencer 42 may be supported by the engine main body 20.

The following describes the phosphorus adhesion reduction portion 44 of the engine unit 11 with reference to FIG. 3 and FIG. 5. FIG. 5(a) is a partial cross section of the exhaust passage member, the phosphorus adhesion reduction portion, and the oxygen sensor of the engine unit shown in FIG. 1. FIG. 5(b) is a cross section taken along a line X1-X1 in FIG. 5(a).

As shown in FIG. 3 and FIG. 5(a), the engine unit 11 includes a phosphorus adhesion reduction portion 44. The second bending portion 43b is not shown in FIG. 5(a). The phosphorus adhesion reduction portion 44 is provided between the combustion chamber 36 and the upstream catalyst 46 in the exhaust passage member 43. To be more specific, the phosphorus adhesion reduction portion 44 is provided in the upstream exhaust pipe 41a. The phosphorus adhesion reduction portion 44 is provided across the entire circumference of the inner surface of the upstream exhaust pipe 41a. The phosphorus adhesion reduction portion 44 is a phosphorus capturing layer. The phosphorus capturing layer 44 is constituted by a phosphorus reactant in order to have a function of capturing phosphorus. The phosphorus reactant is a substance chemically reacting with phosphorus in the exhaust gas. To be more specific, as shown in FIG. 5(b), the phosphorus capturing layer 44 is formed by applying the phosphorus reactant onto the inner surface of the upstream exhaust pipe 41a. In other words, the phosphorus capturing layer 44 is laminated on the inner surface of the upstream exhaust pipe 41a. A part of the phosphorus capturing layer 44 is provided at the first bending portion 43a of the exhaust passage member 43. The surface roughness of the phosphorus capturing layer 44 is higher than that of the inner surface of the upstream exhaust pipe 41a. In other words, the surface area of the phosphorus capturing layer 44 is larger than the surface area of the inner surface of the upstream exhaust pipe 41a. The phosphorus capturing layer 44 therefore increases the surface area in contact with the exhaust gas. The phosphorus capturing layer 44 is therefore able to capture phosphorus in the exhaust gas in contact with the layer.

The phosphorus reactant is a phosphorus adsorbing substance which adsorbs phosphorus by chemically reacting with phosphorus in exhaust gas. The phosphorus reactant is, for example, a metal oxide with an isoelectric point which is more than 3. To be more specific, the phosphorus reactant is a metal oxide including at least one substance selected from the group consisting of U, Mn, Sn, Ti, Fe, Zr, Ce, Al, Y, Zn, La, and Mg. In this connection, it is considered that the phosphorus compound in the exhaust gas exists as phosphate with an isoelectric point which is around 1. For this reason, there is a large difference in the isoelectric point between the phosphorus compound and the metal oxide with the isoelectric point more than 3, and hence the adsorption of the phosphorus compound to the metal oxide is facilitated. In other words, the phosphorus reactant adsorbs phosphorus by the effect of isoelectric point of the metal oxide. The phosphorus reactant may be a substance highly reactive with phosphorus. To be more specific, the phosphorus reactant may be a metal oxide including at least one substance selected from the group consisting of Ba, Sr, Ca, La, Pr, Na, and Zr.

The phosphorus capturing layer 44 may be constituted by a phosphorus reactant and a carrier. The phosphorus reactant is adhered to the carrier. The carrier is a porous body made of inorganic oxide such as a silica, alumina, or titania compound. The carrier is preferably made of a substance which excels in heat resistance and fire resistance. Furthermore, the carrier is preferably made of apatite type complex oxide which prevents the sintering of a carried substance. For example, the phosphorus capturing layer 44 may be mortar, plaster, or a fire resistive covering material including a phosphorus reactant. The mortar, the plaster, and the fire resistive covering material excel in heat resistance.

The following will describe the structure of the upstream catalyst 46 with reference to FIG. 3. As shown in FIG. 3, the casing 47 is included in the exhaust passage member 43. The upstream end of the casing 47 is connected to the upstream exhaust pipe 41a. The downstream end of the casing 47 is connected to the downstream exhaust pipe 41b. The casing 47 is formed to be cylindrical in shape.

The casing 47 includes a catalyst-provided passage member 47b, an upstream passage member 47a, and a downstream passage member 47c. The main catalyst 46 is provided in the catalyst-provided passage member 47b. In the flow direction of the exhaust gas, the upstream end and the downstream end of the catalyst-provided passage member 47b are respectively at the same positions as the upstream end and the downstream end of the main catalyst 46. It is noted that "same position" in this case encompasses positions which are close to each other. The cross-sectional area of the catalyst-provided passage member 47b, cut along the direction orthogonal to the flow direction of the exhaust gas, is substantially constant in the flow direction of the exhaust gas. The upstream passage member 47a is connected to the upstream end of the catalyst-provided passage member 47b. The downstream passage member 47c is connected to the downstream end of the catalyst-provided passage member 47b.

The upstream passage member 47a is at least partially tapered. The tapered portion increases its inner diameter toward the downstream side. The downstream passage member 47c is at least partially tapered. The tapered portion decreases its inner diameter toward the downstream side. It is assumed that the cross-sectional area of the catalyst-provided passage member 47b cut along the direction orthogonal to the flow direction of the exhaust gas is S1. It is assumed that the cross-sectional area of the exhaust pipe 41 cut along the direction orthogonal to the flow direction of the exhaust gas is S2. The area S2 is smaller than the area S1.

The upstream catalyst 46 is fixed to the inside of the catalyst-provided passage member 47b. In other words, the upstream catalyst 46 is provided in the exhaust passage member 43. The exhaust gas is purified when passing through the upstream catalyst 46. When the temperature of the upstream catalyst 46 is lower than a predetermined temperature, the upstream catalyst 46 is in an inactive state and does not exert the purification performance. When the temperature of the upstream catalyst 46 is equal to or higher than the predetermined temperature, the upstream catalyst 46 is in an active state and exerts the purification performance. The upstream catalyst 46 is the most upstream catalyst in the flow direction of the exhaust gas. In other words, the upstream catalyst 46 is a front catalyst which is the frontmost catalyst in the exhaust passage member 43 provided along the front-rear direction, when the motorcycle 1 is viewed in the left-right direction. All exhaust gas exhausted from the exhaust port 38a of the combustion chamber 36 passes through the upstream catalyst 46.

The upstream catalyst 46 is a so-called three-way catalyst. The three-way catalyst removes three substances in exhaust gas, namely hydrocarbon, carbon monoxide, and nitrogen oxide, by oxidation or reduction. The three-way catalyst is a type of oxidation-reduction catalysts.

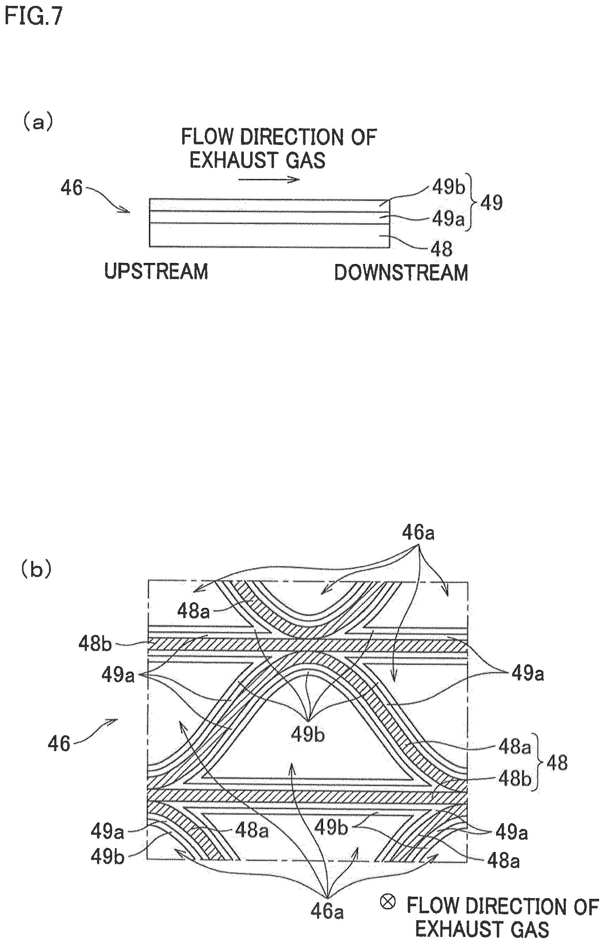

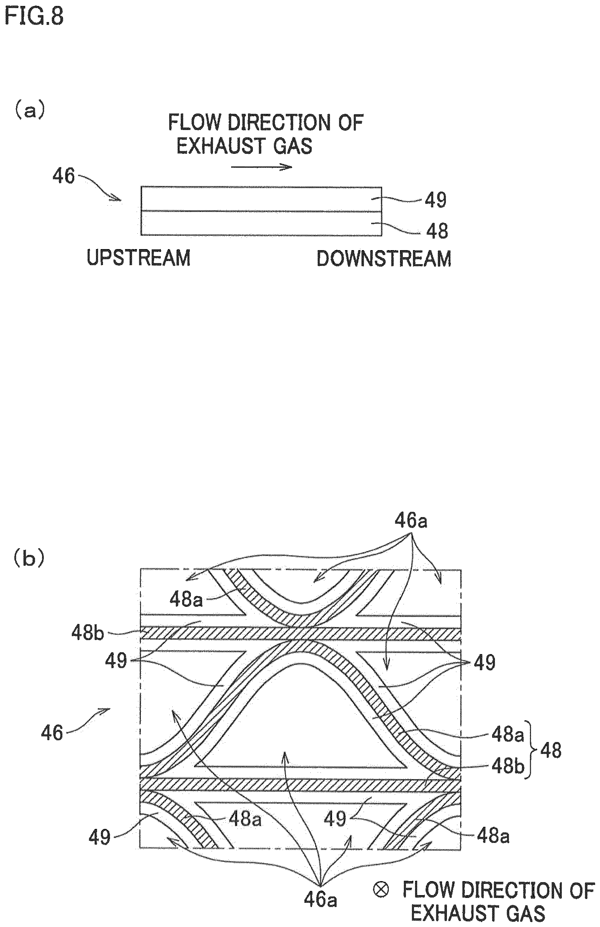

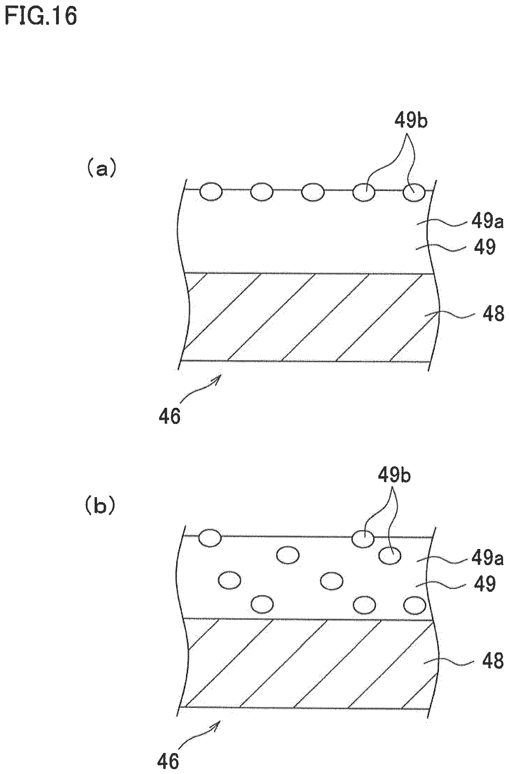

The upstream catalyst 46 is detailed with reference to FIGs. 7(a) and 7(b), FIGs. 8(a) and 8(b), and FIGs. 16(a) and 16(b). FIG. 7(a) schematically shows the structure of each layer in the upstream catalyst. FIG. 7(b) is a partial cross section of the upstream catalyst taken along the direction orthogonal to the flow direction of the exhaust gas. FIGs. 8(a) and 8(b) show a modification of the upstream catalyst 46. FIG. 8(a) schematically shows the structure of each layer in the upstream catalyst. FIG. 8(b) is a partial cross section of the upstream catalyst taken along the direction orthogonal to the flow direction of the exhaust gas. Each of FIGs. 16(a) and 16(b) is a schematic cross section of an upstream catalyst, which shows an example of a catalyst layer of the embodiment.

As shown in FIGs. 7(a) and 7(b), the upstream catalyst 46 includes a base 48 and a catalyst layer 49. The base 48 is a base made of metal. The base 48 is preferably made of a heat-resistant material. The base 48 has a porous structure. The porous structure has a lot of holes penetrating the same in the flow direction of the exhaust gas. To be more specific, the base 48 includes corrugated plates 48a made of metal and a flat plate 48b made of metal. For example, each of the corrugated plates 48a and the flat plates 48b is a metal foil which is made of heat-resistant alloy and several tens of µm in thickness. The base 48 is cylindrically formed by alternately stacking the corrugated plates 48a and the flat plates 48b and winding them. The base 48 is inserted into the cylindrical catalyst-provided passage member 47b. The base 48 has a lot of cells 46a which are partitioned by the corrugated plates 48a and the flat plates 48b. The cells 46a are holes. Each cell 46a is substantially triangular in shape in cross section cut along the direction orthogonal to the longitudinal direction and has three apexes where the cell 46a is in contact with the corrugated plate 48a and the flat plate 48b. The upstream catalyst 46 is provided in the catalyst-provided passage member 47b so that the longitudinal direction of each cell 46a is along the flow direction of the exhaust gas. The cells 46a penetrate the upstream catalyst 46 from the upstream to the downstream in the flow direction of the exhaust gas. The exhaust gas having flown into the upstream catalyst 46 passes the cells 46a.

The catalyst layer 49 is stacked on a surface of the base 48. In other words, the catalyst layer 49 is stacked on surfaces of the cells 46a formed by the corrugated plate 48a and a surface of the flat plate 48b. FIG. 16(a) is a schematic cross section of the upstream catalyst 46, which shows an example of the catalyst layer 49. The catalyst layer 49 may not be structured as shown in FIG. 16(a). The catalyst layer 49 includes a carrier 49a and a noble metal layer 49b made of a noble metal 49b. The carrier 49a is provided between the noble metal layer 49b and the base 48. The carrier 49a is provided to cause the noble metal 49b to be adhered to the base 48. The carrier 49a is made of, for example, inorganic oxide such as a silica, alumina, or titania compound. The carrier 49a may include a substance capable of purifying exhaust gas. The carrier 49a does not include a noble metal. The carrier 49a is, for example, formed on a surface of the cell 46a by a coating method termed wash coat. By the wash coat, for example, a carrier 49a formed of porous γ alumina layer is formed. The noble metal layer 49b is formed to be dispersed on the surface of the carrier 49a. Examples of the noble metal 49b include platinum, palladium, rhodium, ruthenium, gold, silver, osmium, and iridium. Such a noble metal removes hydrocarbon, carbon monoxide, or nitrogen oxide. The noble metal 49b is adhered to the carrier 49a. The noble metal 49b may be included in the catalyst layer 49 in the form of a noble metal alloy. The noble metal 49b may be directly adhered to the carrier 49a or may be adhered to the carrier 49a through the intermediary of a substance other than a noble metal. The noble metal 49b may be chemically bonded with the carrier 49a. The noble metal 49b scarcely blocks micropores of the carrier 49a. The catalyst layer 49 is, for example, formed as described below. To be more specific, for example, after the carrier 49a is formed on the base 48, a solution including the noble metal 49b is applied to a surface of the carrier 49a. Alternatively, the base 48 on which the carrier 49a is formed is immersed in a solution including the noble metal 49b. The catalyst layer 49 may be formed by impregnating the noble metal 49b into the surface layer of the carrier 49a in this way. The noble metal 49b in the noble metal layer 49b purifies exhaust gas. In other words, the exhaust gas is purified upon making contact with the noble metal layer 49b, when passing through the cells 46a. To be more specific, a reaction between the catalyst layer 49 and the exhaust gas progresses not only at the interface between the exhaust gas and the catalyst layer 49 but also inside the catalyst layer 49. In order to exploit this reaction progressing inside, the catalyst layer 49 is formed to have a certain thickness (e.g., about 5 to 30 µm). In other words, the catalyst layer 49 includes the noble metal 49b.

As shown in FIGs. 8(a) and 8(b), the upstream catalyst 46 may include the base 48 and the catalyst layer 49. FIG. 16(b) is a schematic partial cross section of the upstream catalyst 46, which shows an example of the catalyst layer 49. The catalyst layer 49 may not be structured as shown in FIG. 16(b). The carrier 49a is provided to cause the noble metal to be adhered to the base 48. The catalyst layer 49 is stacked on a surface of the base 48. The carrier 49a is provided to cause the noble metal 49b dispersed therein to be adhered to the base 48. In the example shown in FIG. 16(b), the catalyst layer 49 is structured so that the noble metal 49b is dispersed inside the carrier 49a and on a surface of the carrier 49a. To be more specific, for example, the catalyst layer 49 may be formed by immersing the base 48 into a solution including a material forming the carrier 49a and the noble metal 49b. In this case, the noble metal 49b may exist not only inside the carrier 49a but also on a surface of the catalyst layer 49. The noble metal 49b in the catalyst layer 49 purifies exhaust gas. The catalyst layer 49 may be structured so that the noble metal 49b is dispersed only inside the carrier 49a. In other words, the noble metal 49b may not be on a surface of the carrier 49a.

As shown in FIG. 3, the maximum length of the upstream catalyst 46 in the flow direction of the exhaust gas is referred to as L. The maximum length of the upstream catalyst 46 in the direction orthogonal to the flow direction of the exhaust gas is referred to as D. The distance D is the maximum length of the upstream catalyst 46 in the direction orthogonal to the flow direction of the exhaust gas. The length L of the upstream catalyst 46 is longer than the length D of the upstream catalyst 46. The cross-sectional shape of the upstream catalyst 46 cut along the direction orthogonal to the flow direction of the exhaust gas is, for example, circular. The cross-sectional shape of the upstream catalyst 46 cut along the direction orthogonal to the flow direction of the exhaust gas may be elliptic such that the length in the up-down direction is longer than the length in the left-right direction. With this arrangement, the distance between the ground and the upstream catalyst 46 is sufficient even when the upstream catalyst 46 is provided directly below the engine main body 20. Furthermore, the distance between the front wheel 2 and the upstream catalyst 46 is sufficient even when the upstream catalyst 46 is provided in front of the engine main body 20. The increase in size of the straddled vehicle is therefore restrained. The length L of the upstream catalyst 46 may not be longer than the length D of the upstream catalyst 46.

As shown in FIG. 1, the upstream catalyst 46 is provided directly below the engine main body 20 when the motorcycle 1 is viewed in the left-right direction. When the motorcycle 1 is viewed in the left-right direction, the upstream catalyst 46 is provided to intersect with the linear line La1. When the motorcycle 1 is viewed in the left-right direction, a part of the upstream catalyst 46 is provided forward of the crankshaft axis Cr. When the motorcycle 1 is viewed in the left-right direction, the upstream catalyst 46 is in front of (directly below) the cylinder axis Cy. When the motorcycle 1 is viewed in the left-right direction, a part of the upstream catalyst 46 is provided rearward of the crankshaft axis Cr. The entire upstream catalyst 46 may be disposed forward of the crankshaft axis Cr. In other words, when the motorcycle 1 is viewed in the left-right direction, the upstream catalyst 46 may be provided in front of the engine main body 20. When the motorcycle 1 is viewed in the left-right direction, the entire upstream catalyst 46 may be provided at least partially forward of the crankshaft axis Cr. Due to this, the upstream catalyst 46 is positioned to be closer to the combustion chamber 36. This arrangement is able to further shorten the time required to activate the upstream catalyst 46. When the motorcycle 1 is viewed in the left-right direction, the entire upstream catalyst 46 may be provided rearward of the crankshaft axis Cr. When the motorcycle 1 is viewed in the left-right direction, the upstream catalyst 46 may be provided rearward of (above) the cylinder axis Cy. When the motorcycle 1 is viewed in the left-right direction, a linear line which is orthogonal to the cylinder axis Cy and passes the crankshaft axis Cr is referred to as a linear line La2. When the motorcycle 1 is viewed in the left-right direction, the upstream catalyst 46 is provided behind (directly below) the linear line La2. When the motorcycle 1 is viewed in the left-right direction, the upstream catalyst 46 may be provided in front of (directly above) the linear line La2. The upstream catalyst 46 positioned to be closer to the combustion chamber 36 in this case. This arrangement is able to further shorten the time required to activate the upstream catalyst 46.

### [Control of Engine Unit]

An example of control of the engine unit 11 of First Embodiment will be described. FIG. 4 is a control block diagram of the motorcycle of First Embodiment.

As shown in FIG. 3, the engine unit 11 includes the engine rotation speed sensor 92a, a throttle opening degree sensor 92b (throttle position sensor), the engine temperature sensor 92c (see FIG. 4), an intake pressure sensor 92d, the intake temperature sensor 92e, and the upstream oxygen sensor 92f. The engine rotation speed sensor 92a is configured to detect the rotation speed of the crankshaft 34, i.e., the engine rotation speed. The throttle opening degree sensor 92b detects the opening degree of the throttle valve 54 by detecting the position of the throttle valve 54. Hereinafter, the opening degree of the throttle valve 54 will be referred to as a throttle opening degree. The engine temperature sensor 92c is configured to detect the temperature of the engine main body 20. The intake pressure sensor 92d is configured to detect the pressure in the intake passage member 51. The intake temperature sensor 92e is configured to detect the temperature of air in the intake passage member 51. The upstream oxygen sensor 92f is configured to detect the oxygen density in the exhaust gas passing the exhaust passage member 43.

As shown in FIG. 4, the engine unit 11 includes an ECU 90 which controls the engine main body 20. The ECU 90 is connected to sensors such as the engine rotation speed sensor 92a, the engine temperature sensor 92c, the throttle opening degree sensor 92b, the intake pressure sensor 92d, the intake temperature sensor 92e, the upstream oxygen sensor 92f, and a vehicle speed sensor. The ECU 90 is further connected to an ignition coil 93, the injector 94, the fuel pump 95, the display 14 (see FIG. 1), and the like. The ECU 90 includes a control unit 91a and an activation instruction unit 91b. The activation instruction unit 91b includes an ignition driving circuit 91c, an injector driving circuit 91d, and a pump driving circuit 91e.

Upon receiving a signal from the control unit 91a, the ignition driving circuit 91c, the injector driving circuit 91d, and the pump driving circuit 91e drive the ignition coil 93, the injector 94, and the fuel pump 95, respectively. As the ignition coil 93 is driven, spark discharge occurs at the ignition plug and the mixture gas is ignited. The fuel pump 95 is connected to the injector 94 via a fuel hose. As the fuel pump 95 is driven, fuel in a fuel tank (not illustrated) is pressure-fed to the injector 94.

The control unit 91a is a microcomputer, for example. Based on a signal from the upstream oxygen sensor 92f, a signal from the engine rotation speed sensor 92a or the like, the control unit 91a controls the ignition driving circuit 91c, the injector driving circuit 91d, and the pump driving circuit 91e. The control unit 91a controls an ignition timing by controlling the ignition driving circuit 91c. The control unit 91a controls a fuel injection amount by controlling the injector driving circuit 91d and the pump driving circuit 91e.

To improve the purification efficiency of the later-described catalyst 46 and the combustion efficiency, the air-fuel ratio of the air-fuel mixture in the combustion chamber 36 is preferably equal to the stoichiometric air-fuel ratio (stoichiometry). The control unit 91a increases or decreases the fuel injection amount according to need.

The following describes an example of control of the fuel injection amount (combustion control) by the control unit 91a.

To begin with, the control unit 91a calculates a basic fuel injection amount based on signals from the engine rotation speed sensor 92a, the throttle opening degree sensor 92b, the engine temperature sensor 92c, and the intake pressure sensor 92d. To be more specific, an intake air amount is calculated by using a map in which a throttle opening degree and an engine rotation speed are associated with an intake air amount and a map in which an intake pressure and an engine rotation speed are associated with an intake air amount. Based on the intake air amount calculated from the maps, the basic fuel injection amount with which a target air-fuel ratio is achieved is determined. When the throttle opening degree is small, the map in which an intake pressure and an engine rotation speed are associated with an intake air amount is used. When the throttle opening degree is great, the map in which a throttle opening degree and an engine rotation speed are associated with an intake air amount is used.

In addition to the above, based on a signal from the upstream oxygen sensor 92f, the control unit 91a calculates a feedback correction value for correcting the basic fuel injection amount. To be more specific, based on a signal from the upstream oxygen sensor 92f, it is determined whether the air-fuel mixture is lean or rich. The term "rich" indicates a state in which fuel is excessive as compared to the stoichiometric air-fuel ratio. The term "lean" indicates a state in which air is excessive as compared to the stoichiometric air-fuel ratio. When determining that the air-fuel mixture is lean, the control unit 91a calculates the feedback correction value so that the next fuel injection amount is increased. On the other hand, when determining that the air-fuel mixture is rich, the control unit 91a calculates the feedback correction value so that the next fuel injection amount is decreased.

In addition to the above, the control unit 91a calculates a correction value for correcting the basic fuel injection amount, based on the engine temperature, the outside temperature, the outside atmosphere, or the like. Furthermore, the control unit 91a calculates a correction value in accordance with transient characteristics at acceleration and deceleration.

The control unit 91a calculates the fuel injection amount based on the basic fuel injection amount and the correction values such as the feedback correction value. Based on the fuel injection amount calculated in this way, the fuel pump 95 and the injector 94 are driven. As such, the ECU 90 processes a signal from the upstream oxygen sensor 92f. Furthermore, the ECU 90 performs combustion control based on a signal from the upstream oxygen sensor 92f.

The structure of the motorcycle 1 of First Embodiment has been described. The motorcycle 1 of First Embodiment has the following characteristics.

The engine unit 11 is mounted on the motorcycle 1. The engine unit 11 includes the engine main body 20, the exhaust passage member 43, the upstream catalyst 46, the upstream oxygen sensor 92f, and the phosphorus adhesion reduction portion 44. The engine main body 20 includes the cylinder member 28 including the combustion chamber 36. The exhaust passage member 43 is provided with a discharge port 42e through which exhaust gas is discharged to the atmosphere. The exhaust passage member 43 allows the exhaust gas to flow from the combustion chamber 36 to the discharge port 42e. The upstream catalyst 46 is the most upstream catalyst in the exhaust passage member 43 in the direction in which the exhaust gas flows. The upstream catalyst 46 includes a catalyst layer 49. The catalyst layer 49 includes a noble metal which purifies the exhaust gas. In other words, the upstream catalyst 46 is provided at a location close to the combustion chamber 36. This arrangement is able to shorten the time required to activate the upstream catalyst 46.

The upstream oxygen sensor 92f is provided between the combustion chamber 36 and the upstream catalyst 46 in the exhaust passage member 43. The upstream oxygen sensor 92f is configured to detect the oxygen density of the exhaust gas. The phosphorus adhesion reduction portion 44 restrains adhesion of phosphorus to the catalyst layer 49. The phosphorus adhesion reduction portion 44 includes the phosphorus capturing layer 44. The phosphorus capturing layer 44 is provided at the upstream exhaust pipe 41a which is provided between the combustion chamber 36 and the catalyst layer 49 in the exhaust passage member 43. In other words, the phosphorus capturing layer 44 is provided upstream of the upstream catalyst 46 in the flow direction of the exhaust gas. The phosphorus adhesion reduction portion 44 is not the upstream oxygen sensor 92f. The phosphorus capturing layer 44a is applied to the inner surface of the exhaust passage member 43. The phosphorus capturing layer 44 is constituted by a phosphorus reactant chemically reacting with phosphorus in order to have a function of capturing phosphorus. The exhaust passage member 43 includes the first bending portion 43a and the second bending portion 43b which are provided between the combustion chamber 36 and the upstream catalyst 46. Because the flow rate of the exhaust gas is high, the exhaust gas tends to collide with the first bending portion 43a and the second bending portion 43b of the exhaust passage member 43. Due to this, phosphorus tends to be adhered to the first bending portion 43a and the second bending portion 43b of the exhaust passage member 43. The phosphorus capturing layer 44 is provided between the combustion chamber 36 and the upstream catalyst 46 in the exhaust passage member 43. The phosphorus capturing layer 44 includes a phosphorus reactant which chemically reacts with phosphorus in the exhaust gas. The phosphorus in the exhaust gas passing the phosphorus capturing layer 44 chemically reacts with the phosphorus reactant. The phosphorus reactant is a substance adsorbing phosphorus, for example. In this case, the phosphorus in the exhaust gas is adsorbed as phosphorus in the exhaust gas chemically reacts with the phosphorus reactant. The phosphorus reactant is able to capture the phosphorus as the reactant chemically reacts with the phosphorus in the exhaust gas passing the phosphorus capturing layer 44. The phosphorus capturing layer 44 is therefore able to capture the phosphorus and prevents the phosphorus from being adhered to the catalyst layer 49 of the upstream catalyst 46.

The phosphorus capturing layer 44 is partially provided at the first bending portion 43a and the second bending portion 43b of the exhaust passage member 43. Phosphorus tends to be adhered to the first bending portion 43a and the second bending portion 43b of the exhaust passage member 43. The phosphorus capturing layer 44 is provided at the first bending portion 43a and the second bending portion 43b of the exhaust passage member 43. Due to this, the phosphorus capturing layer 44 is able to chemically react with a large amount of phosphorus in the exhaust gas. The phosphorus capturing layer 44 is therefore able to capture more phosphorus and further prevents phosphorus from being adhered to the catalyst layer 49 of the upstream catalyst 46. In this way, variation in the purification performance of purifying the exhaust gas can be further restrained in the motorcycle 1.

The phosphorus reactant is a metal oxide including at least one substance selected from the group consisting of U, Mn, Sn, Ti, Fe, Zr, Ce, Al, Y, Zn, La, and Mg. These types of phosphorus reactants are metal oxides with an isoelectric point which is more than 3. It is considered that the phosphorus compound in the exhaust gas exists as phosphate with an isoelectric point which is around 1. There is a large difference in the isoelectric point between the phosphorus compound and the metal oxide with the isoelectric point more than 3, and hence the adsorption of the phosphorus compound to the metal oxide is facilitated. The phosphorus reactant adsorbs phosphorus by the effect of isoelectric point of the metal oxide. In other words, these types of phosphorus reactants are able to restrain the phosphorus, a large amount of which is included in the exhaust gas, from being adhered to the catalyst layer 49. In this way, variation in the purification performance of purifying the exhaust gas can be restrained in the motorcycle 1.

The phosphorus reactant is a metal oxide including at least one substance selected from the group consisting of Ba, Sr, Ca, La, Pr, Na, and Zr. Each of these types of phosphorus reactants is a substance highly reactive with phosphorus. The phosphorus reactant is therefore able to capture more phosphorus in the exhaust gas passing the upstream catalyst 46. In other words, these types of phosphorus reactants are able to restrain phosphorus, a large amount of which is included in the exhaust gas, from being adhered to the catalyst layer 49. In this way, variation in the purification performance of purifying the exhaust gas can be restrained in the motorcycle 1.

The oil used in the engine unit 11 is specified as oil in which the content of a phosphorus compound is larger than 0.08mass%. An engine unit of a straddled vehicle is required to use oil including more phosphorus compound than oil used in an engine unit of a four-wheeled vehicle. The engine unit 11 of the motorcycle 1 which is a straddled vehicle exhausts gas including more phosphorus, as compared to four-wheel vehicles. The phosphorus adhesion reduction portion 44 restrains adhesion of phosphorus to the catalyst layer 49. In other words, the phosphorus capturing layer which is the phosphorus adhesion reduction portion 44 captures phosphorus and prevents phosphorus from being adhered to the catalyst layer 49 of the upstream catalyst 46. In this way, variation in the purification performance of purifying the exhaust gas can be restrained in the motorcycle 1 which exhausts gas including more phosphorus as compared to four-wheeled vehicles.

The engine unit 11 further includes the transmission unit 61. Furthermore, the oil lubricating the engine main body 20 and the oil lubricating the transmission unit 61 are the same oil. In straddled vehicles, oil lubricating the engine main body and oil lubricating the transmission unit tend to be the same oil. Meanwhile, in automobiles, oil lubricating the engine main body and oil lubricating the transmission unit tend not to be the same oil. Due to this, the motorcycle 1 which is a straddled vehicle consumes more oil per displacement as compared to automobiles. Furthermore, as compared to automobiles, an amount of phosphorus in the exhaust gas per displacement is large in the motorcycle 1 which is a straddled vehicle. Furthermore, the transmission unit 61 is configured to transmit power by using the shift gears 63a and 64a which form the power transmission mechanism. In order to prevent the shift gears 63a and 64a from being worn, a lot of phosphorus compound is required as an additive in the oil lubricating the transmission unit 61. Due to this, the oil lubricating the engine main body 20 includes a lot of phosphorus compound, too. The engine unit 11 therefore exhausts gas including a large amount of phosphorus. For this reason, variation in the purification performance of purifying the exhaust gas can be restrained in the motorcycle 1 which exhausts gas including a large amount of phosphorus per displacement as compared to automobiles.

The engine unit 11 further includes the clutch unit 62. Furthermore, the oil lubricating the engine main body 20 and the oil lubricating the clutch unit 62 are the same oil. Being different from automobiles, the motorcycle 1 which is a straddled vehicle includes the clutch unit 62 to be able to move even when the engine is in a stopped state. In straddled vehicles, oil lubricating the engine main body and oil lubricating the clutch unit tend to be the same oil. Being different from automobiles, oil with which the clutch unit 62 is slippery is not used in the motorcycle 1 which is a straddled vehicle. Oil with a small amount of a phosphorus compound tends to be oil with which a clutch unit is slippery. Oil for automobiles, which includes a small amount of a phosphorus compound, is not used in the motorcycle 1 which is a straddled vehicle. In other words, the engine unit 11 of the motorcycle 1 which is a straddled vehicle uses oil including a large amount of a phosphorus compound as compared to an engine unit of automobiles. In other words, the motorcycle 1 which is a straddled vehicle exhausts gas including more phosphorus, as compared to automobiles. The phosphorus adhesion reduction portion 44 restrains adhesion of phosphorus to the catalyst layer 49. In other words, the phosphorus capturing layer 44 which is the phosphorus adhesion reduction portion 44 captures phosphorus and prevents phosphorus from being adhered to the catalyst layer 49 of the upstream catalyst 46. In this way, variation in the purification performance of purifying the exhaust gas can be restrained in the motorcycle 1 which exhausts gas including more phosphorus as compared to automobiles.

The engine unit 11 is a natural air-cooled engine. The temperature of the combustion chamber 36 is high in the natural air-cooled engine unit 11. Due to this, a large amount of a phosphorus compound in oil is decomposed in the combustion chamber 36 of the natural air-cooled engine unit 11 as compared to a forced air-cooled engine unit and a water-cooled engine unit. Furthermore, exhaust gas including a large amount of phosphorus is exhausted from the natural air-cooled engine unit as compared to a forced air-cooled engine unit and a water-cooled engine unit. The phosphorus adhesion reduction portion 44 restrains adhesion of phosphorus to the catalyst layer 49. In other words, the phosphorus capturing layer 44 which is the phosphorus adhesion reduction portion 44 captures phosphorus and prevents phosphorus from being adhered to the catalyst layer 49 of the upstream catalyst 46. In this way, variation in the purification performance of purifying the exhaust gas can be restrained also in the motorcycle 1 including the natural air-cooled engine unit 11.

The oil lubricating the engine main body 20 has an evaporation temperature higher than the wall surface temperature of the engine main body 20. An amount of the phosphorus compound in the oil lubricating the engine main body 20, which is decomposed in the combustion chamber 36, can therefore be restrained. The amount of the phosphorus in the exhaust gas can therefore be restrained. In this way, variation in the purification performance of purifying the exhaust gas can be restrained in the motorcycle 1.

The upstream oxygen sensor 92f includes the detecting element 81. The detecting element of the upstream oxygen sensor 92f includes the oxygen sensor catalyst layer 86. The oxygen sensor catalyst layer 86 purifies the exhaust gas. The oxygen sensor catalyst layer 86 includes a noble metal such as Pt-Rh, which is highly capable of combusting hydrogen in the exhaust gas. To put it differently, the oxygen sensor catalyst layer 86 purifies hydrogen in the exhaust gas. The oxygen sensor catalyst layer 86 is provided at the detecting element 81 of the upstream oxygen sensor 92f in order to restrain an influence of hydrogen. The influence of hydrogen is as follows. Because hydrogen is small in molecular weight and very rapidly diffuses, hydrogen tends to reach the detecting element 81 of the upstream oxygen sensor 92f. An equilibration reaction of hydrogen occurs at electrodes of the detecting element 81, with the result that an output is disadvantageously shifted. The adhesion of phosphorus to the oxygen sensor catalyst layer 86 occurs as in the catalyst layer 49. On account of the occurrence of vitrification of phosphorus, the detection accuracy of the upstream oxygen sensor 92f is deteriorated. The upstream oxygen sensor 92f is provided between the phosphorus adhesion reduction portion 44 and the upstream catalyst 46 in the exhaust passage member 43. The phosphorus adhesion reduction portion 44 captures phosphorus in the exhaust gas. It is therefore possible to restrain an amount of phosphorus reaching the oxygen sensor catalyst layer 86 of the upstream oxygen sensor 92f. Due to this, the detection accuracy of the upstream oxygen sensor 92f is improved.

The upstream oxygen sensor 92f is provided at a location where the path length from the combustion chamber 36 to the upstream oxygen sensor 92f is longer than the path length from the upstream oxygen sensor 92f to the upstream catalyst 46. In other words, the upstream oxygen sensor 92f is provided at a location closer to the upstream catalyst 46 than to the combustion chamber 36. Furthermore, the upstream oxygen sensor 92f is provided at a location where the path length from the exhaust pipe 41 to the upstream oxygen sensor 92f is longer than the path length from the upstream oxygen sensor 92f to the upstream catalyst 46. In other words, the upstream oxygen sensor 92f is provided at a location closer to the upstream catalyst 46 than to the upstream end of the upstream exhaust pipe 41a. Furthermore, the upstream oxygen sensor 92f is provided at a location where the path length from the upstream end of the upstream exhaust pipe 41a to the upstream oxygen sensor 92f is longer than the path length from the upstream oxygen sensor 92f to the downstream end of the upstream exhaust pipe 41a. The upstream oxygen sensor 92f is provided at a location closer to the downstream end than to the upstream end of the upstream exhaust pipe 41a. The phosphorus adhesion reduction portion 44 provided upstream of the upstream oxygen sensor 92f captures phosphorus included in the exhaust gas before passing the upstream oxygen sensor 92f. When the upstream oxygen sensor 92f is provided to be closer to the upstream catalyst 46 than to the combustion chamber 36, the surface area of the phosphorus adhesion reduction portion 44 provided upstream of the upstream oxygen sensor 92f is large as compared to cases where the upstream oxygen sensor 92f is provided to be closer to the upstream catalyst 46 than to the combustion chamber 36. When the upstream oxygen sensor 92f is provided to be closer to the upstream catalyst 46 than to the upstream end of the exhaust pipe 41, the surface area of the phosphorus adhesion reduction portion 44 provided upstream of the upstream oxygen sensor 92f is large as compared to cases where the upstream oxygen sensor 92f is provided to be closer to the upstream end of the exhaust pipe 41 than to the upstream catalyst 46. When the upstream oxygen sensor 92f is provided to be closer to the downstream end of the upstream exhaust pipe 41a than to the upstream end, the surface area of the phosphorus adhesion reduction portion 44 provided upstream of the upstream oxygen sensor 92f is large as compared to cases where the upstream oxygen sensor 92f is provided to be closer to the upstream end of the upstream exhaust pipe 41a than to the downstream end. The phosphorus adhesion reduction portion 44 provided upstream of the upstream oxygen sensor 92f is able to restrain an amount of phosphorus reaching the upstream oxygen sensor 92f. Due to this, phosphorus adhered to the upstream oxygen sensor 92f is restrained. The detection accuracy of the upstream oxygen sensor 92f is therefore improved.

### (Second Embodiment)

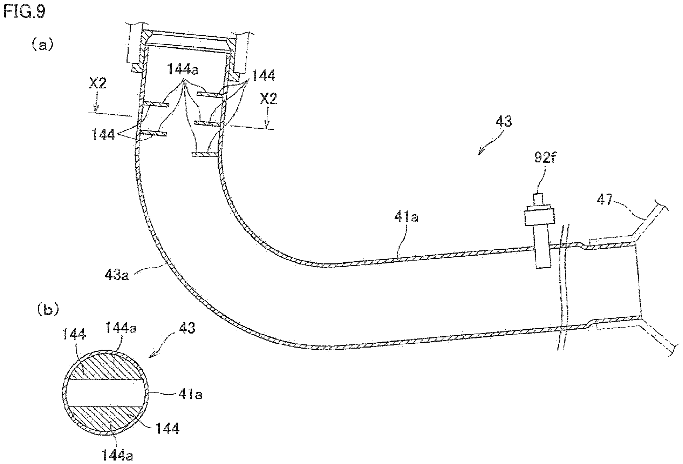

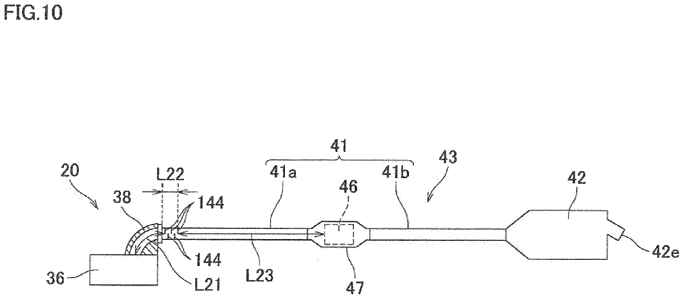

The following will describe a motorcycle of Second Embodiment which is a second specific example of the embodiment of the present teaching, with reference to FIG. 9 and FIG. 10. Components having the same structure as those in First Embodiment will be given the same reference numerals, and the description thereof will be omitted. FIG. 9(a) is a partial cross section showing an exhaust passage member, a phosphorus adhesion reduction portion, and an oxygen sensor of an engine unit of a motorcycle of Second Embodiment. FIG. 9(b) is a cross section taken along a line X2-X2 in FIG. 9(a). FIG. 10 is a schematic diagram of the exhaust passage member, the phosphorus adhesion reduction portion, the oxygen sensor, and an upstream catalyst of the engine unit of Second Embodiment. The engine unit of the motorcycle of Second Embodiment is different from the engine unit 11 of the motorcycle of First Embodiment in terms of the structure of the phosphorus adhesion reduction portion. The engine unit of Second Embodiment is structurally identical with the engine unit 11 of the motorcycle of First Embodiment except the phosphorus adhesion reduction portion.

As shown in FIG. 9, the engine unit of the present embodiment includes five phosphorus adhesion reduction portions 144. The second bending portion 43b is not shown in FIG. 9(a). The five phosphorus adhesion reduction portions 144 are provided in the upstream exhaust pipe 41a. In other words, the five phosphorus adhesion reduction portions 144 are provided between the combustion chamber 36 and the upstream catalyst 46 in the exhaust passage member 43. As shown in FIG. 10, the path length from the combustion chamber 36 to the upstream end of the exhaust pipe 41 is referred to as L21. The path length from the upstream end of the exhaust pipe 41 to the most downstream phosphorus capturing structure 144 in the flow direction of the exhaust gas is referred to as L22. The path length from the most downstream phosphorus capturing structure 144 in the flow direction of the exhaust gas to the upstream catalyst 46 is referred to as L23. The most downstream phosphorus capturing structure 144 in the flow direction of the exhaust gas is provided at a location where the path length L21+L22 from the combustion chamber 36 to the most downstream phosphorus capturing structure 144 in the flow direction of the exhaust gas is shorter than the path length L23 from the most downstream phosphorus capturing structure 144 to the upstream catalyst 46 in the flow direction of the exhaust gas. In other words, the five phosphorus capturing structures 144 are provided at locations where the path length from the combustion chamber 36 to the phosphorus capturing structures 144 is shorter than the path length from the phosphorus capturing structures 144 to the upstream catalyst 46. The phosphorus adhesion reduction portion 144 shown in FIG. 9 is a phosphorus capturing structure. The phosphorus capturing structures 144 have a function of capturing phosphorus by decreasing the flow rate of the exhaust gas. Furthermore, the phosphorus capturing structures 144 are surface area increasing portions which increase the surface area of the exhaust passage member 43. Furthermore, the phosphorus capturing structures 144 are resistance portions which impart resistance to the exhaust gas passing the exhaust passage member 43. To be more specific, the phosphorus capturing structures 144 are semi-circular plate members which are adhered by welding or the like to the inner side of the upstream exhaust pipe 41a. The phosphorus capturing structures 144 are provided at locations closer to the upstream end than to the downstream end of the upstream exhaust pipe 41a. The phosphorus capturing structures 144 are provided along a direction intersecting with the flow direction of the exhaust gas in the exhaust passage member 43. In an example shown in FIG. 9, the phosphorus capturing structures 144 are provided along the direction orthogonal to the flow direction of the exhaust gas in the exhaust passage member 43. The exhaust gas passing the exhaust passage member 43 collides with the phosphorus capturing structures 144. The phosphorus capturing structures 144 increase the surface area of the upstream exhaust pipe 41a where the phosphorus capturing structures 144 are provided. To put it differently, the upstream exhaust pipe 41a in which the phosphorus capturing structures 144 are provided has a large surface area in contact with the exhaust gas, as compared to the upstream exhaust pipe 41a in which no phosphorus capturing structure 144 is provided. The phosphorus capturing structures 144 therefore increase the surface area in contact with the exhaust gas. Because the flow rate of the exhaust gas is high, the flow rate of the exhaust gas can be decreased when the phosphorus capturing structures 144 are provided in the exhaust passage member 43. Phosphorus tends to be adhered to the phosphorus capturing structures 144 which decrease the flow rate of the exhaust gas. The phosphorus capturing structures 144 are therefore able to capture phosphorus in the exhaust gas in contact with the layer.

The phosphorus capturing structures 144 preferably include a phosphorus capturing structure layer 144a having a surface on which a phosphorus reactant is formed. The phosphorus capturing structure layer 144a is preferably constituted by a phosphorus reactant and a carrier. The phosphorus reactant is a substance chemically reacting with phosphorus as described above. The phosphorus capturing structures 144 have a function of capturing phosphorus. The phosphorus capturing structures 144 can therefore capture a larger amount of phosphorus in the exhaust gas.

While the phosphorus capturing structures 144 are five plate members in the example in FIG. 9, the disclosure is not limited to this arrangement. The phosphorus capturing structures 144 may be a single plate member, less than five plate members, or more than five plate members. Furthermore, while the phosphorus capturing structures 144 are provided at locations closer to the downstream end than to the upstream end of the upstream exhaust pipe 41a, the disclosure is not limited to this arrangement. The phosphorus capturing structures 144 may be provided at any locations in the upstream exhaust pipe 41a on condition that the path length from the combustion chamber 36 to the phosphorus capturing structures 144 is shorter than the path length from the phosphorus capturing structures 144 to the upstream catalyst 46. Furthermore, while the phosphorus capturing structures 144 are semi-circular plate members in the example shown in FIG. 9, the disclosure is not limited to this arrangement. Each phosphorus capturing structure 144 may be a plate member with a ring shape, a spiral shape, or another shape. Furthermore, the phosphorus capturing structure 144 may be a cylindrical member provided in the upstream exhaust pipe 41a.

The upstream oxygen sensor 92f is provided on the upstream exhaust pipe 41a. In other words, the upstream oxygen sensor 92f is provided in the exhaust passage member 43. The upstream oxygen sensor 92f is provided upstream of the catalyst 46 in the exhaust passage member 43. The upstream oxygen sensor 92f is provided downstream of the phosphorus capturing structures 144 in the exhaust passage member 43. In other words, the upstream oxygen sensor 92f is provided between the phosphorus capturing structures 144 and the upstream catalyst 46 in the exhaust passage member 43.

In the motorcycle of Second Embodiment having been described above, the arrangement identical with that in First Embodiment exerts the same effect as in First Embodiment. The motorcycle of Second Embodiment has the following characteristics.

The phosphorus capturing structures 144 are provided between the combustion chambers 36 and the upstream catalyst 46 in the exhaust passage member 43. In other words, the phosphorus capturing structures 144 are provided upstream of the upstream catalyst 46 in the flow direction of the exhaust gas. The phosphorus capturing structures 144 have a function of capturing phosphorus by decreasing the flow rate of the exhaust gas. Because the flow rate of the exhaust gas is high, the flow rate of the exhaust gas can be decreased when the structure is provided in the exhaust passage member 43. Phosphorus tends to be adhered to the structure which decreases the flow rate of the exhaust gas. The path length from the combustion chamber 36 to the phosphorus capturing structures 144 is shorter than the path length from the phosphorus capturing structures 144 to the upstream catalyst 46. In other words, the phosphorus capturing structures 144 are provided to be close to the combustion chamber 36. The phosphorus capturing structures 144 decrease the flow rate of the exhaust gas to cause phosphorus in the exhaust gas to be adhered thereto. The phosphorus capturing structures 144 are therefore able to capture the phosphorus and prevents the phosphorus from being adhered to the catalyst layer 49 of the upstream catalyst 46. In this way, variation in the purification performance of purifying the exhaust gas can be restrained in the motorcycle 1.

In addition to the above, each phosphorus capturing structure 144 includes the phosphorus capturing structure layer 144a. The phosphorus capturing structure layer 144a includes, at least on a surface, a phosphorus reactant chemically reacting with the phosphorus in order to have a function of capturing phosphorus. The phosphorus capturing structure layer 144a chemically reacts with phosphorus in the exhaust gas. In this connection, the phosphorus capturing structures 144 decrease the flow rate of the exhaust gas to cause phosphorus in the exhaust gas to be adhered thereto. Furthermore, the phosphorus capturing structure layer 144a causes phosphorus in the exhaust gas to be adhered thereto by chemically reacting with the phosphorus. The phosphorus capturing structure layer 144a is therefore able to capture more phosphorus and further prevents phosphorus from being adhered to the catalyst layer 49 of the upstream catalyst 46. In this way, variation in the purification performance of purifying the exhaust gas can be further restrained in the motorcycle 1.

### (Third Embodiment)

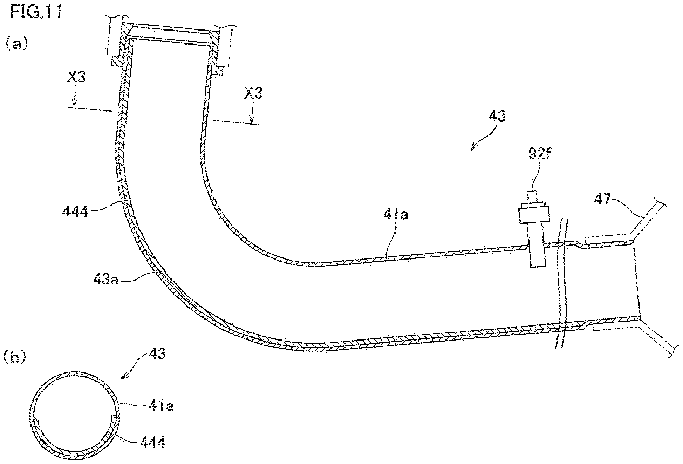

The following will describe a motorcycle of Third Embodiment which is a third specific example of the embodiment of the present teaching, with reference to FIG. 11. Components having the same structure as those in First Embodiment will be given the same reference numerals, and the description thereof will be omitted. FIG. 11(a) is a partial cross section showing an exhaust passage member, a phosphorus adhesion reduction portion, and an oxygen sensor of an engine unit of a motorcycle of Third Embodiment. FIG. 11(b) is a cross section taken along a line X3-X3 in FIG. 11(a). The second bending portion 43b is not shown in FIG. 11(a). The engine unit of the motorcycle of Third Embodiment is different from the engine unit 11 of the motorcycle of First Embodiment in terms of the structure of the phosphorus capturing layer. The engine unit of Third Embodiment is structurally identical with the engine unit 11 of the motorcycle of First Embodiment except the phosphorus capturing layer.

In First Embodiment, the phosphorus capturing layer 44 is provided over the entire circumference of the inner surface of the upstream exhaust pipe 41a. Alternatively, the phosphorus capturing layer may be provided at a part in the circumferential direction of the inner surface of the upstream exhaust pipe 41a. In Third Embodiment, as shown in FIG. 11(a) and FIG. 11(b), a phosphorus capturing layer 444 is provided over half of the entire circumference of the inner surface of the upstream exhaust pipe 41a. The phosphorus capturing layer 444 is provided between the combustion chamber and the upstream catalyst 46 in the exhaust passage member 43. The phosphorus capturing layer 444 is partially provided at the first bending portion 43a and the second bending portion 43b of the exhaust passage member 43. The phosphorus capturing layer 444 is constituted by a phosphorus reactant chemically reacting with phosphorus in order to have a function of capturing phosphorus. The phosphorus reactant is a substance adsorbing phosphorus, for example. In this case, the phosphorus in the exhaust gas is adsorbed as the phosphorus in the exhaust gas chemically reacts with the phosphorus reactant.

In the motorcycle of Third Embodiment having been described above, the arrangement identical with that in First Embodiment exerts the same effect as in First Embodiment. The motorcycle of Third Embodiment has the following characteristics.

Because the flow rate of the exhaust gas is high, the exhaust gas tends to collide with the first bending portion 43a and the second bending portion 43b of the exhaust passage member 43. Due to this, phosphorus tends to be adhered to the first bending portion 43a and the second bending portion 43b of the exhaust passage member 43. The phosphorus capturing layer 444 is provided partially at the first bending portion 43a and the second bending portion 43b of the exhaust passage member 43. The phosphorus capturing layer 44 includes a phosphorus reactant which chemically reacts with phosphorus in the exhaust gas. Phosphorus in the exhaust gas passing the phosphorus capturing layer 444 chemically reacts with the phosphorus reactant. The phosphorus reactant is able to capture phosphorus as the reactant chemically reacts with phosphorus in the exhaust gas passing the phosphorus capturing layer 444. The phosphorus capturing layer 444 is therefore able to capture phosphorus and prevents phosphorus from being adhered to the catalyst layer 49 of the upstream catalyst 46.

### (Fourth Embodiment)

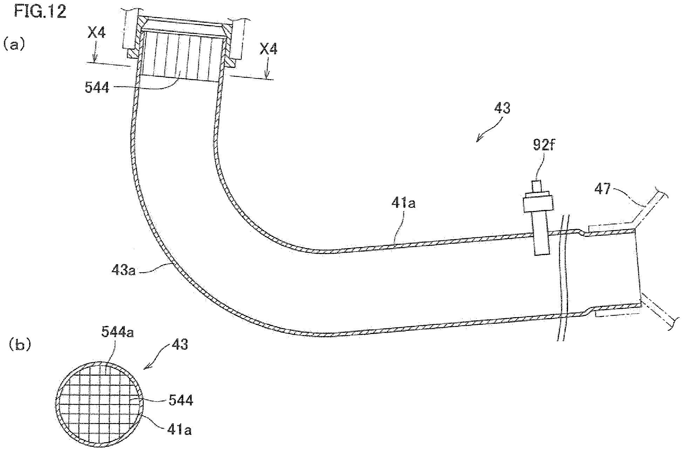

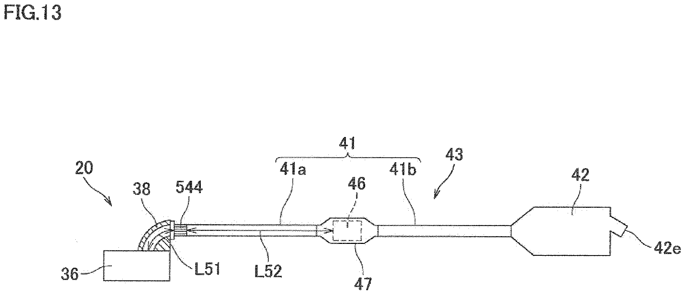

The following will describe a motorcycle of Fourth Embodiment which is a fourth specific example of the embodiment of the present teaching, with reference to FIG. 12 and FIG. 13. Components having the same structure as those in Second Embodiment will be given the same reference numerals, and the description thereof will be omitted. FIG. 12(a) is a partial cross section showing an exhaust passage member, a phosphorus adhesion reduction portion, and an oxygen sensor of an engine unit of a motorcycle of Fourth Embodiment. FIG. 12(b) is a cross section taken along a line X4-X4 in FIG. 12(a). The second bending portion 43b is not shown in FIG. 12(a). FIG. 13 is a schematic diagram of the exhaust passage member, the phosphorus adhesion reduction portion, the oxygen sensor, and an upstream catalyst of the engine unit of Fourth Embodiment. The engine unit of the motorcycle of Fourth Embodiment is different from the engine unit 11 of the motorcycle of First Embodiment in terms of the structure of the phosphorus capturing structure. The engine unit of Fourth Embodiment is structurally identical with the engine unit 11 of the motorcycle of Second Embodiment except the phosphorus capturing structure.

In Second Embodiment, the phosphorus capturing structures 144 are semi-circular plates which are provided in the upstream exhaust pipe 41a. Meanwhile, as shown in FIG. 12(a) and FIG. 12(b), a phosphorus capturing structure 544 is a porous structure. In the direction orthogonal to the flow direction of the exhaust gas, the outer diameter of the phosphorus capturing structure 544 is substantially identical with the inner diameter of the exhaust passage member 43. The phosphorus capturing structure 544 is provided between the combustion chamber 36 and the upstream catalyst 46 in the exhaust passage member 43. The phosphorus capturing structure 544 has a porous structure. In the phosphorus capturing structure 544, a plurality of cells are formed in cross section cut along the direction orthogonal to the flow direction of the exhaust gas. The cells of the phosphorus capturing structure 544 penetrate the phosphorus capturing structure 544 from the upstream to the downstream in the flow direction of the exhaust gas. The maximum width in cross section of each cell of the phosphorus capturing structure 544 cut along the direction orthogonal to the flow direction of the exhaust gas is sufficiently shorter than the length of each cell of the phosphorus capturing structure 544 in the flow direction of the exhaust gas. The phosphorus capturing structure 544 is adhered by welding or the like to the inner circumferential surface of the upstream exhaust pipe 41a. As shown in FIG. 13, the path length from the combustion chamber 36 to the upstream end of the exhaust pipe 41 is referred to as L51. The path length from the phosphorus capturing structure 544 to the upstream catalyst 46 is referred to as L52. The path length from the upstream end of the exhaust pipe 41 to the phosphorus capturing structure 544 is zero. The phosphorus capturing structure 544 is provided at a location where the path length L51 from the combustion chamber 36 to the phosphorus capturing structure 544 is shorter than the path length L52 from the phosphorus capturing structure 544 to the upstream catalyst 46. Furthermore, the phosphorus capturing structure 544 is a resistance portion which imparts resistance to the exhaust gas passing the exhaust passage member 43. The phosphorus capturing structure 544 is provided upstream of the upstream exhaust pipe 41a in the flow direction of the exhaust gas. The exhaust gas passing the exhaust passage member 43 passes through the cells of the phosphorus capturing structure 544. The surface area of the phosphorus capturing structure 544 is equal to the total surface area of the cells. To put it differently, the upstream exhaust pipe 41a in which the phosphorus capturing structure 544 is provided has a large surface area in contact with the exhaust gas, as compared to the upstream exhaust pipe 41a in which no phosphorus capturing structure 544 is provided. The phosphorus capturing structure 544 therefore increases the surface area in contact with the exhaust gas. Because the flow rate of the exhaust gas is high, the flow rate of the exhaust gas can be decreased when the phosphorus capturing structure 544 is provided in the exhaust passage member 43. Phosphorus tends to be adhered to the phosphorus capturing structure 544 which decreases the flow rate of the exhaust gas. The phosphorus capturing structure 544 is therefore able to capture phosphorus in the exhaust gas in contact with the layer.

The phosphorus capturing structure 544 preferably includes a phosphorus capturing structure layer 544a having a surface on which a phosphorus reactant is formed. The phosphorus capturing structure layer 544a is preferably constituted by a phosphorus reactant and a carrier. The phosphorus reactant is a substance chemically reacting with phosphorus as described above. The phosphorus capturing structure 544 has a function of capturing phosphorus. The phosphorus capturing structure 544 can therefore capture a larger amount of phosphorus in the exhaust gas.

The upstream oxygen sensor 92f is provided downstream of the phosphorus capturing structure 544 in the upstream exhaust pipe 41a. In other words, the upstream oxygen sensor 92f is provided between the phosphorus capturing structure 544 and the upstream catalyst 46. The phosphorus capturing structure 544 is therefore able to capture more phosphorus in the exhaust gas before passing the upstream oxygen sensor. It is therefore possible to restrain an amount of phosphorus reaching the upstream oxygen sensor 92f. Due to this, phosphorus adhered to the upstream oxygen sensor 92f is restrained. The detection accuracy of the upstream oxygen sensor 92f can therefore be improved.

In the motorcycle of Second Embodiment having been described above, the arrangement identical with that in First Embodiment exerts the same effect as in First Embodiment. The motorcycle of Second Embodiment has the following characteristics.

The phosphorus capturing structure 544 is provided between the combustion chamber 36 and the upstream catalyst 46 in the exhaust passage member 43. In other words, the phosphorus capturing structure 544 is provided upstream of the upstream catalyst 46 in the flow direction of the exhaust gas. The phosphorus capturing structure 544 decreases the flow rate of the exhaust gas in order to have a function of capturing phosphorus. Because the flow rate of the exhaust gas is high, the flow rate of the exhaust gas can be decreased when the structure is provided in the exhaust passage member 43. Phosphorus tends to be adhered to the structure which decreases the flow rate of the exhaust gas. The path length L51 from the combustion chamber 36 to the phosphorus capturing structure 544 is shorter than the path length L52 from the phosphorus capturing structure 544 to the upstream catalyst 46. In other words, the phosphorus capturing structure 544 is provided to be close to the combustion chamber 36. The phosphorus capturing structure 544 decreases the flow rate of the exhaust gas to cause phosphorus in the exhaust gas to be adhered thereto. The phosphorus capturing structure 544 is therefore able to capture phosphorus and prevents phosphorus from being adhered to the catalyst layer 49 of the upstream catalyst 46. In this way, variation in the purification performance of purifying the exhaust gas can be restrained in the motorcycle 1.

In addition to the above, the phosphorus capturing structure 544 includes the phosphorus capturing structure layer 544a. The phosphorus capturing structure layer 144a has a function of capturing phosphorus because a phosphorus reactant chemically reacting with phosphorus is formed at least on a surface of the layer. The phosphorus capturing structure layer 544a chemically reacts with phosphorus in the exhaust gas. The phosphorus capturing structure 544 decreases the flow rate of the exhaust gas to cause phosphorus in the exhaust gas to be adhered thereto. Furthermore, the phosphorus capturing structure layer 544a causes phosphorus in the exhaust gas to be adhered thereto by chemically reacting with phosphorus. The phosphorus capturing structure layer 544a is therefore able to capture more phosphorus and further prevents phosphorus from being adhered to the catalyst layer 49 of the upstream catalyst 46. In this way, variation in the purification performance of purifying the exhaust gas can be further restrained in the motorcycle 1.

Preferred embodiments of the present teaching have been described above. However, the present teaching is not limited to the above-described embodiments, and various changes can be made within the scope of the claims. Further, modifications described below may be used in combination as needed.

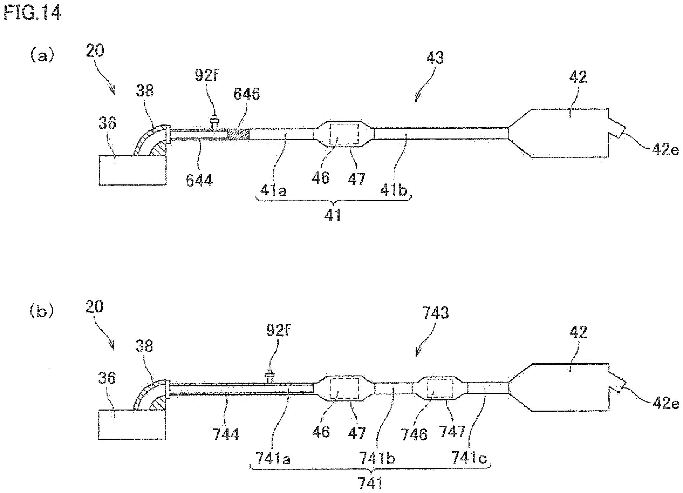

In the embodiments above, the engine unit includes only one upstream catalyst. Alternatively, the engine unit may include plural catalysts. These catalysts are provided in the exhaust passage member. Providing the plural catalysts in the exhaust passage member produces the following effects. The exhaust gas is purified by these catalysts. The purification performance of purifying the exhaust gas by the catalysts is therefore improved. The following will describe a modification in which an engine unit includes plural catalysts, with reference to FIG. 14(a) and FIG. 14(b). Each of FIG. 14(a) and FIG. 14(b) is a schematic diagram of an exhaust passage member, a phosphorus adhesion reduction portion, an oxygen sensor, and a catalyst of an engine unit of a modification. It is noted that items identical with those in First Embodiment are indicated by the same reference numerals, and explanations thereof are omitted.

In FIG. 14(a), the engine unit includes two catalysts. The two catalysts are a catalyst 646 and the catalyst 46. The catalyst 646 and the catalyst 46 are provided inside the exhaust passage member 43. The catalyst 646 is provided in the upstream exhaust pipe 41a. The upstream catalyst 646 is the most upstream catalyst in the flow direction of the exhaust gas. In other words, the catalyst 646 is the upstream catalyst in the present teaching. Hereinafter, in this modification, the catalyst 646 is referred to as an upstream catalyst 646. The upstream catalyst 646 is formed to be cylindrical in shape and provided on the inner surface of the upstream exhaust pipe 41a. The upstream catalyst 646 is a so-called three-way catalyst. The upstream catalyst 646 includes a cylindrical base provided on the inner surface side of the upstream exhaust pipe 41a and a cylindrical catalyst layer stacked on a surface of the base.

A phosphorus capturing layer 644 which is a phosphorus adhesion reduction portion is provided in the upstream exhaust pipe 41a. The phosphorus capturing layer 644 is provided over the entire circumference of the inner surface of the upstream exhaust pipe 41a, from the upstream end of the upstream exhaust pipe 41a to the upstream end of the upstream catalyst 646. The phosphorus capturing layer 644 is a chemical reaction portion having a phosphorus reactant which chemically reacts with phosphorus in the exhaust gas. The phosphorus capturing layer 644 is a layer in shape and is formed by applying a phosphorus reactant to the inner circumferential surface of the upstream exhaust pipe 41a. The phosphorus capturing layer 644 includes a phosphorus reactant which chemically reacts with phosphorus in the exhaust gas. The phosphorus in the exhaust gas passing the phosphorus capturing layer 644 chemically reacts with the phosphorus reactant. The phosphorus reactant is able to capture phosphorus as the reactant chemically reacts with phosphorus in the exhaust gas passing the phosphorus capturing layer 644. The phosphorus capturing layer 644 is therefore able to capture phosphorus and prevent phosphorus from being adhered to the catalyst layer of the upstream catalyst 646.

The upstream oxygen sensor 92f is provided on the upstream exhaust pipe 41a. The upstream oxygen sensor 92f is provided upstream of the upstream catalyst 646 in the exhaust passage member 43. The upstream oxygen sensor 92f is preferably provided at a location where the path length from the upstream oxygen sensor 92f to the upstream end of the exhaust pipe 41 is longer than the path length from the upstream oxygen sensor 92f to the upstream catalyst 646. In other words, the upstream oxygen sensor 92f is preferably provided at a location closer to the upstream catalyst 646 than to the upstream end of the upstream exhaust pipe 41a. The phosphorus capturing layer 644 provided upstream of the upstream oxygen sensor 92f captures phosphorus included in the exhaust gas before passing the upstream oxygen sensor 92f. When the upstream oxygen sensor 92f is provided to be closer to the upstream catalyst 646 than to the upstream end of the upstream exhaust pipe 41a, the surface area of the phosphorus capturing layer 644 provided upstream of the upstream oxygen sensor 92f is large as compared to cases where the upstream oxygen sensor 92f is provided to be closer to the upstream end of the upstream exhaust pipe 41a than to the upstream catalyst 646. The phosphorus capturing layer 644 provided upstream of the upstream oxygen sensor 92f is able to restrain an amount of phosphorus reaching the upstream oxygen sensor 92f. Due to this, phosphorus adhered to the upstream oxygen sensor 92f is restrained. Due to this, the detection accuracy of the upstream oxygen sensor 92f is improved. The upstream oxygen sensor 92f may be provided at a location where the path length from the upstream oxygen sensor 92f to the upstream end of the upstream exhaust pipe 41a is longer than the path length from the upstream oxygen sensor 92f to the downstream end of the upstream exhaust pipe 41a. The upstream oxygen sensor 92f may be provided at a location where the path length from the upstream oxygen sensor 92f to the combustion chamber 36 is longer than the path length from the upstream oxygen sensor 92f to the upstream catalyst 46.

In FIG. 14(b), the engine unit includes two catalysts. The two catalysts are the catalyst 46 and a catalyst 746. The catalyst 46 and the catalyst 746 are provided on an exhaust passage member 743. The exhaust passage member 743 includes the cylinder exhaust passage member 38, a first exhaust pipe 741a, a second exhaust pipe 741b, a third exhaust pipe 741c, the first casing 47, and a second casing 747. An exhaust pipe 741 includes the first exhaust pipe 741a, the second exhaust pipe 741b, and the third exhaust pipe 741c. An upstream end portion of the first exhaust pipe 741a is connected to the cylinder exhaust passage member 38. The upstream end of the first casing 47 is connected to the first exhaust pipe 741a. The downstream end of the first casing 47 is connected to the second exhaust pipe 741b. The upstream end of the second casing 747 is connected to the second exhaust pipe 741b. The downstream end of the second casing 747 is connected to the third exhaust pipe 741c. A downstream end portion of the third exhaust pipe 741c is inserted into the silencer 42. The catalyst 46 is provided in the first casing 47. The catalyst 746 is provided in the second casing 747. The catalyst 46 includes the catalyst layer 49 (see FIG. 7) which purifies the exhaust gas at the most upstream in the flow direction of the exhaust gas. In other words, the catalyst 46 is the upstream catalyst in the present teaching. Hereinafter, in this modification, the catalyst 46 is referred to as an upstream catalyst 46. Each of the first casing 47 and the second casing 747 is structurally identical with the first casing 47 of First Embodiment and is therefore not explained. The upstream catalyst 46 and the catalyst 746 are structurally identical with the catalyst 46 of First Embodiment and is therefore not explained.

A phosphorus capturing layer 744 is provided between the combustion chamber 36 and the upstream catalyst 46 in the first exhaust pipe 741a. The phosphorus capturing layer 744 is provided over the entire circumference of the inner surface of the first exhaust pipe 741a. The phosphorus capturing layer 744 is a chemical reaction portion having a phosphorus reactant which chemically reacts with phosphorus in the exhaust gas. The phosphorus capturing layer 744 is a layer in shape and is formed by applying a phosphorus reactant to the inner circumferential surface of the first exhaust pipe 741a. The phosphorus capturing layer 744 includes a phosphorus reactant which chemically reacts with phosphorus in the exhaust gas. The phosphorus in the exhaust gas passing the phosphorus capturing layer 744 chemically reacts with the phosphorus reactant. The phosphorus reactant is able to capture phosphorus as the reactant chemically reacts with phosphorus in the exhaust gas passing the phosphorus capturing layer 744. The phosphorus capturing layer 744 is therefore able to capture phosphorus and prevent phosphorus from being adhered to the catalyst layer of the upstream catalyst 646.

The upstream oxygen sensor 92f is provided on the first exhaust pipe 741a of the exhaust passage member 743. The upstream oxygen sensor 92f is provided upstream of the upstream catalyst 46 in the exhaust passage member 743. The upstream oxygen sensor 92f is preferably provided at a location closer to the downstream end than to the upstream end of the first exhaust pipe 741a. In other words, the distance from the upstream oxygen sensor 92f to the upstream end of the first exhaust pipe 741a is longer than the distance from the upstream oxygen sensor 92f to the downstream end of the first exhaust pipe 741a. The phosphorus capturing layer 744 provided upstream of the upstream oxygen sensor 92f captures phosphorus included in the exhaust gas before passing the upstream oxygen sensor 92f. When the upstream oxygen sensor 92f is provided to be closer to the downstream end of the first exhaust pipe 741a than to the upstream end, the surface area of the phosphorus capturing layer 744 provided upstream of the upstream oxygen sensor 92f is large as compared to cases where the upstream oxygen sensor 92f is provided to be closer to the upstream end of the first exhaust pipe 741a than to the downstream end. The phosphorus capturing layer 744 provided upstream of the upstream oxygen sensor 92f is able to restrain an amount of phosphorus reaching the oxygen sensor catalyst layer 86 of the upstream oxygen sensor 92f. Due to this, phosphorus adhered to the upstream oxygen sensor 92f is restrained. Due to this, the detection accuracy of the upstream oxygen sensor 92f is improved. The upstream oxygen sensor 92f may be provided at a location where the path length from the upstream oxygen sensor 92f to the upstream end of the first exhaust pipe 741a is longer than the path length from the upstream oxygen sensor 92f to the of the upstream catalyst 46. The upstream oxygen sensor 92f may be provided at a location where the path length from the upstream oxygen sensor 92f to the combustion chamber 36 is longer than the path length from the upstream oxygen sensor 92f to the upstream catalyst 46.

In the present teaching, a catalyst may be structured such that plural catalyst pieces are provided to be close to each other. Each catalyst piece includes a base and a catalyst layer. The catalyst pieces are close to one another in the sense that the distance between neighboring catalyst pieces is short as compared to the length of each catalyst piece in the flow direction of the exhaust gas. The base of the catalyst pieces may be of one type or plural types. The noble metal used in the catalyst layer of each of the catalyst pieces may be made of one type or multiple types of materials. The carrier in the catalyst layer may be made of one type or multiple types of materials.

In the embodiments above, the phosphorus adhesion reduction portion is provided in the upstream exhaust pipe 41a. Alternatively, in the present teaching, the phosphorus adhesion reduction portion may be provided in at least one of a cylinder exhaust passage member or an upstream exhaust pipe. In other words, the phosphorus adhesion reduction portion may be differently disposed on the condition that it is provided between the combustion chamber and the upstream catalyst in the exhaust passage member.

In the embodiments above, the casing and the exhaust pipe are joined with each other after they are independently formed. Alternatively, the casing and the exhaust pipe may be integrally formed.

In the embodiments above, the phosphorus capturing layer is constituted by a phosphorus reactant chemically reacting with phosphorus in order to have a function of capturing phosphorus. Alternatively, in the present teaching, the phosphorus capturing layer which may have a function of capturing phosphorus as a surface of the layer is constituted by a rough surface in order to have a function of capturing phosphorus. In such a case, for example, the phosphorus capturing layer has a rough surface as a substance different from the phosphorus reactant is applied to the inner surface of the exhaust passage member. The phosphorus capturing layer is able to cause a large amount of phosphorus included in the exhaust gas to be adhered to the surface of the layer which is constituted by a rough surface.

In the embodiments above, the phosphorus capturing structure layer includes, at least on a surface, a phosphorus reactant chemically reacting with the phosphorus in order to have a function of capturing phosphorus. Alternatively, in the present teaching, the phosphorus capturing structure layer may have a surface constituted by a rough surface in order to have a function of capturing phosphorus. In such a case, for example, the phosphorus capturing structure layer which has a rough surface as a substance different from the phosphorus reactant is applied to the inner surface of the exhaust passage member. The phosphorus capturing structure layer is able to cause phosphorus included in the exhaust gas to be adhered to the surface of the layer which is constituted by a rough surface.

In the present teaching, the phosphorus adhesion reduction portion may include both the phosphorus capturing layer and the phosphorus adhesion reduction portion.

In the present teaching, the shape of the exhaust pipe is not limited to the illustrated shape. Furthermore, the internal structure of the silencer is not limited to the structure shown in the drawings.

In the embodiments above, the upstream catalyst and the silencer are provided rightward of the center in the left-right direction of the straddled vehicle. Alternatively, in the present teaching, the upstream catalyst may be provided at the center in the left-right direction of the straddled vehicle or leftward of the center in the left-right direction of the straddled vehicle. Furthermore, the silencer may be provided leftward of the center in the left-right direction of the straddled vehicle. The center in the left-right direction of a straddled vehicle indicates the position of a linear line which passes the center in the left-right direction of the front wheel and the center in the left-right direction of the rear wheel, when viewed in the up-down direction.

In the embodiments above, a part of the exhaust passage member is provided directly below the crankshaft axis Cr. Alternatively, in the present teaching, a part of the exhaust passage member may be provided directly above the crankshaft axis Cr.

In the embodiments above, the catalysts is a three-way catalyst. In the present teaching, however, the catalyst may not be a three-way catalyst. In the present teaching, the catalyst may be a catalyst which removes one or two of hydrocarbon, carbon monoxide, and nitrogen oxide. In the present teaching, the upstream catalyst may not be an oxidation-reduction catalyst. In the present teaching, the upstream catalyst may be an oxidation catalyst or a reduction catalyst which removes harmful substances by only oxidation or reduction. An example of the reduction catalyst is a catalyst which removes nitrogen oxide by reduction.

In the present teaching, the base on which the catalyst layer is stacked may be a base made of ceramic.

In the present teaching, the base on which the catalyst layer is stacked has a porous structure. Each hole of the porous structure may be triangular, square, or hexagonal in shape. For example, the porous structure may be a honeycomb structure.

In the present teaching, the position of the catalyst is not limited to each of the positions shown in the figures. For example, in First Embodiment above, the entirety of the upstream catalyst 46 is provided forward of the crankshaft axis Cr. Furthermore, when the motorcycle 1 is viewed in the left-right direction, the upstream catalyst 46 is provided directly below the engine main body 20. Alternatively, in the present teaching, the upstream catalyst may be positioned at least partially forward of the crankshaft axis Cr. Alternatively, in the present teaching, the upstream catalyst may be provided in front of the engine main body when the straddled vehicle is viewed in the left-right direction. Alternatively, in the present teaching, the upstream catalyst may be positioned at least partially rearward of the crankshaft axis Cr. Alternatively, the upstream catalyst 46 may be provided behind the engine main body 20 when the motorcycle 1 is viewed in the left-right direction. This prevents the occurrence of sintering of the upstream catalyst, when the upstream catalyst is provided forward of the crankshaft axis Cr and the temperature of the exhaust gas flowing into the upstream catalyst is too high.

In the embodiments above, the position of the upstream oxygen detector is not limited to each of the positions shown in the figures. For example, in the present teaching, the upstream oxygen detector may be provided at any position upstream of the upstream catalyst of the exhaust passage member in the flow direction of the exhaust gas. In the present teaching, the engine unit may further include a downstream oxygen detector. The downstream oxygen detector is provided between the catalyst layer and the discharge port of the exhaust passage member. To put it differently, the downstream oxygen detector is provided at any position downstream of the upstream catalyst of the exhaust passage member in the flow direction of the exhaust gas. The downstream oxygen detector is configured to detect the oxygen density of the exhaust gas. It is possible to control the engine unit based on the oxygen density of the exhaust gas detected by the downstream oxygen detector. Furthermore, it is possible to detect the deterioration in purification performance of purifying the exhaust gas of the straddled vehicle, based on the oxygen density of the exhaust gas detected by the downstream oxygen detector. This makes it possible to restrain variation in the purification performance of purifying the exhaust gas in the straddled vehicle. In the present teaching, in the exhaust passage member, one upstream oxygen detector and one downstream oxygen detector may be provided upstream of and downstream of the upstream catalyst, respectively.

In the present teaching, each of the upstream oxygen detector and the downstream oxygen detector may include a heater. The detecting element of each of the upstream oxygen detector and the downstream oxygen detector is able to detect the oxygen density when it is heated to a high temperature and activated. Due to this, when each of the upstream oxygen detector and the downstream oxygen detector includes the heater, the start of the oxygen density detection is moved ahead as the heater heats the detecting element at the same time as the start of the engine.

In the embodiments above, gas flowing in the exhaust passage member during engine driving is only exhaust gas exhausted from the combustion chamber. However, in the present teaching, a secondary air supply mechanism which is configured to supply air to the exhaust passage member may be included. A known arrangement is used for the specific arrangement of the secondary air supply mechanism. The secondary air supply mechanism may forcibly supply air to the exhaust passage member by means of an air pump. Furthermore, the secondary air supply mechanism may take air into the exhaust passage member by means of negative pressure in the exhaust passage member. In this case, the secondary air supply mechanism includes a reed valve which opens and closes in accordance with the pressure pulsation of the exhaust gas. When the secondary air supply mechanism is provided, the upstream oxygen detector may be provided upstream or downstream of a part in the exhaust passage member, from which air flows in.

In the embodiments above, the injector is provided to supply fuel to the combustion chamber. In the present teaching, a fuel supplier for supplying fuel to the combustion chamber is not limited to the injector. For example, a fuel supplier configured to supply fuel to the combustion chamber by negative pressure may be provided.

In the embodiment above, only one exhaust port is provided for one combustion chamber. In the present teaching, a plurality of exhaust ports may be provided for one combustion chamber. For example, this modification applies to cases where a variable valve mechanism is included. Exhaust paths connected to plural exhaust ports are gathered at a location upstream of the silencer. The exhaust paths connected to the respective exhaust ports are preferably gathered at the cylinder member. The exhaust path is a path from the combustion chamber to the discharge port exposed to the atmosphere.

The combustion chamber of the present teaching may include a main combustion chamber and an auxiliary combustion chamber connected to the main combustion chamber. In this case, one combustion chamber is formed of the main combustion chamber and the auxiliary combustion chamber.

In the embodiments above, the crankcase member and the cylinder member are separate members. Alternatively, in the present teaching, the crankcase member and the cylinder member may be integrally formed. In the embodiment above, the cylinder body, the cylinder head, and the head cover are different members. Alternatively, in the present teaching, two or three of the cylinder body, the cylinder head, and the head cover may be integrally formed.

In the embodiments above, the engine main body is a natural air-cooled engine. Alternatively, in the present teaching, the engine main body may be a forced air-cooled engine. In this regard, a natural air-cooled engine exhausts gas including a large amount of phosphorus as compared to a forcible water-cooled engine. Meanwhile, in the present teaching, the engine main body may be a water-cooled engine. In this regard, an air-cooled engine exhausts gas including a large amount of phosphorus as compared to a water-cooled engine.

In the embodiments above, the engine unit is a single-cylinder engine. Alternatively, in the present teaching, the engine unit may be a multi-cylinder engine. The engine unit is a four-stroke engine. Alternatively, the engine unit may be a two-stroke engine.

The embodiments above deal with a sports motorcycle as an example of the straddled vehicle. The transmission unit is therefore a stepped transmission. Alternatively, the straddled vehicle of the present teaching may be a scooter-type motorcycle. The transmission unit may therefore be a continuously variable transmission. In this case, the transmission unit is not housed in the crankcase. The engine main body is housed in the crankcase. The oil lubricating the engine main body and the oil lubricating the transmission unit may be the same oil. The oil lubricating the engine main body and the oil lubricating the transmission unit may not be the same oil.

The embodiments above deal with a motorcycle as an example of the straddled vehicle. The straddled vehicle of the present teaching, however, is not limited to the motorcycle. The present teaching may be applied to a leaning vehicle which is not a motorcycle. The leaning vehicle is a vehicle which includes a vehicle body frame structured to lean rightward of the vehicle when turning right and lean leftward of the vehicle when turning left. The present teaching may be applied to a straddled vehicle which is not a motorcycle. A straddled vehicle indicates all types of vehicles on which a rider rides in a manner of straddling a saddle. The straddled vehicle of the present invention includes motorcycles, tricycles, four-wheeled buggies (ATVs: All Terrain Vehicles), personal water crafts, snowmobiles, and the like.

### [Reference Signs List]

1 straddled vehicle, motorcycle
11 engine unit
20 engine main body
28 cylinder member
36 combustion chamber
42e discharge port
43, 343, 743, 843 exhaust passage member
44, 144, 444, 544, 644, 744 phosphorus adhesion reduction portion
46, 646, 746 catalyst (upstream catalyst)
48 base
49, 249 catalyst layer
61 transmission unit
62 clutch unit
92f upstream oxygen sensor (upstream oxygen detector)

## Claims

1. A straddled vehicle on which an engine unit is mounted,
the engine unit including:
an engine main body which includes a cylinder member including a combustion chamber;
an exhaust passage member which includes a discharge port through which exhaust gas is discharged to the atmosphere and which allows the exhaust gas to flow from the combustion chamber to the discharge port;
an upstream catalyst which is the most upstream catalyst in the exhaust passage member in a flow direction of the exhaust gas and which includes a catalyst layer including a noble metal purifying the exhaust gas;
an upstream oxygen detector which is provided between the combustion chamber and the upstream catalyst in the exhaust passage member and which is configured to detect the oxygen density of the exhaust gas; and
a phosphorus adhesion reduction portion which is configured to restrain adherence of phosphorus to the catalyst layer and which includes at least one of (A) a phosphorus capturing layer which is provided between the combustion chamber and the upstream catalyst in the exhaust passage member and is applied to an inner surface of the exhaust passage member, the phosphorus capturing layer either being formed of a phosphorus reactant chemically reacting with the phosphorus in order to have a function of capturing phosphorus or having a surface constituted by a rough surface in order to have a function of capturing phosphorus or (B) a phosphorus capturing structure which is provided between the combustion chamber and the upstream catalyst in the exhaust passage member and decreases the flow rate of the exhaust gas in order to have a function of capturing phosphorus by decreasing the flow rate of the exhaust gas, the phosphorus capturing structure being provided at a location where a path length from the combustion chamber to the phosphorus capturing structure is shorter than a path length from the phosphorus capturing structure to the upstream catalyst.

2. The straddled vehicle according to claim 1, wherein, the phosphorus capturing layer is at least partially provided at a bending portion of the exhaust passage member.

3. The straddled vehicle according to claim 1 or 2, wherein, the phosphorus capturing structure includes a phosphorus capturing structure layer which either includes, at least on a surface, a phosphorus reactant chemically reacting with phosphorus in order to have a function of capturing phosphorus or has a surface constituted by a rough surface in order to have a function of capturing phosphorus.

4. The straddled vehicle according to any one of claims 1 to 3, wherein, the phosphorus reactant is a metal oxide including at least one substance selected from the group consisting of U, Mn, Sn, Ti, Fe, Zr, Ce, Al, Y, Zn, La, and Mg.

5. The straddled vehicle according to any one of claims 1 to 3, wherein, the phosphorus reactant is a metal oxide including at least one substance selected from the group consisting of Ba, Sr, Ca, La, Pr, Na, and Zr.

6. The straddled vehicle according to any one of claims 1 to 5, wherein, the phosphorus capturing structure is constituted by a porous structure having holes penetrating the phosphorus capturing structure in the flow direction of the exhaust gas.

7. The straddled vehicle according to any one of claims 1 to 6, wherein, the engine unit is an engine unit which is specified to use oil in which the content of the phosphorus compound is larger than 0.08mass%.

8. The straddled vehicle according to any one of claims 1 to 7, wherein, the engine unit further includes a transmission unit, and
oil lubricating the engine main body unit and oil lubricating the transmission unit are the same oil.

9. The straddled vehicle according to any one of claims 1 to 8, wherein, the engine unit further includes a clutch unit, and
oil lubricating the engine main body unit and oil lubricating the clutch unit are the same oil.

10. The straddled vehicle according to any one of claims 1 to 9, wherein, the engine unit is a natural air-cooled engine unit.

11. The straddled vehicle according to any one of claims 1 to 10, wherein, the oil is oil having an evaporation temperature higher than a temperature of a wall surface of the engine main body unit.

12. The straddled vehicle according to any one of claims 1 to 11, wherein,
a detecting element of the upstream oxygen detector includes an upstream oxygen detector catalyst layer including a noble metal and purifying the exhaust gas, and
the upstream oxygen detector is provided between the phosphorus adhesion reduction portion and the upstream catalyst in the exhaust passage member.

13. The straddled vehicle according to any one of claims 1 to 12, wherein, the engine unit includes a downstream oxygen detector which is provided between the upstream catalyst and the discharge port in the exhaust passage member and is configured to detect the oxygen density of the exhaust gas.

14. The straddled vehicle according to any one of claims 1 to 13, wherein, the upstream oxygen detector is provided at a location where a path length from the combustion chamber to the upstream oxygen detector is longer than a path length from the upstream oxygen detector to the upstream catalyst.

15. The straddled vehicle according to any one of claims 1 to 13, wherein,
the exhaust passage member includes:
a cylinder exhaust passage member which is formed in the cylinder member and is connected to the combustion chamber;
a silencer including the discharge port; and
an exhaust pipe connected to the cylinder exhaust passage member and the silencer, and
the upstream oxygen detector is provided at a location where a path length from the upstream end of the exhaust pipe to the upstream oxygen detector is longer than a path length from the upstream oxygen detector to the upstream catalyst.
